# EUROPÄISCHE PATENTSCHRIFT

(11) **EP 0 791 446 B1**
(45) Veröffentlichungstag und Bekanntmachung des Hinweises auf die Patenterteilung: **12.12.2001**
(21) Anmeldenummer: 97102511.9
(22) Anmeldetag: 17.02.1997
(51) Int. Cl.: B29C 45/14, G06K 19/077, H05K 3/40

(54) **Verfahren und Kunststoff-Spritzgiesswerkzeug zur Herstellung eines Verbundkörpers**
Method and plastic injection mould for manufacturing a composite article
Procédé et moule d'injection de matières plastiques pour la fabrication d'un article composite

(30) Priorität: 26.02.1996 DE 19607212
(43) Veröffentlichungstag der Anmeldung: 27.08.1997
(73) Patentinhaber: HERBST, Richard, D-85386 Eching (DE)
(72) Erfinder: HERBST, Richard, D-85386 Eching (DE)
(74) Vertreter: Witte, Alexander, Dr.-Ing.

(56) Entgegenhaltungen:
- EP-A- 0 399 868
- EP-A- 0 649 719
- EP-A- 0 706 214
- WO-A-92/13318
- DE-A- 3 624 852
- DE-A- 3 917 707
- DE-A- 3 924 439
- GB-A- 2 142 478
- JP-A- 2 102 098
- US-A- 4 066 839
- US-A- 4 474 292
- US-A- 4 625 102
- US-A- 4 961 893
- US-A- 5 350 553
- US-A- 5 417 905
- PATENT ABSTRACTS OF JAPAN vol. 015, no. 105 (M-1092), 13. März 1991 & JP 03 001992 A (ASAHI CHEM IND CO LTD), 8. Januar 1991
- PATENT ABSTRACTS OF JAPAN vol. 013, no. 421 (E-822), 19. September 1989 & JP 01 157541 A (MITSUBISHI ELECTRIC CORP), 20. Juni 1989

## Beschreibung

Die Erfindung betrifft ein Verfahren zum Herstellen eines Verbundkörpers mit einer Kunststoffmasse und mindestens einem zumindest teilweise in der Kunststoffmasse eingelagerten Chip, bei dem ein Hohlraum eines Kunststoff-Spritzgießwerkzeuges mit der Kunststoffmasse ausgespritzt wird, bei dem ferner der Chip in die Kunststoffmasse eingelagert und eine elektrische Kontaktierung zwischen dem Chip und Kontaktsegmenten einer an einer Oberfläche des Verbundkörpers befindlichen Kontaktfläche hergestellt wird.

Die Erfindung betrifft ferner ein Kunstoff-Spritzgießwerkzeug zur Herstellung von Verbundkörpern mit einer Kunststoffmasse, in die mindestens teilweise ein Chip eingelagert ist, mit zwei beweglichen Werkzeughälften, zwischen denen ein Hohlraum gebildet ist, in den flüssige Kunststoffmasse einspritzbar ist, und mit einer Zuführ- und Entnahmeeinrichtung zum Einlegen von Rohteilen in den Hohlraum und zum Entnehmen der Verbundteile nach Beendigung des Spritzgießvorganges.

Ein Verfahren der vorstehend genannten Art ist aus dem Dokument EP 0 399 868 B1 bekannt.

Die vorliegende Erfindung befaßt sich vorzugsweise, aber nicht ausschließlich, mit der Herstellung von sogenannten Smart Cards. Unter einer Smart Card versteht man eine ein- oder doppelseitig kaschierte Kunststoffkarte, die üblicherweise mit Hinweis- und/oder Werbeaufdrucken und/oder mit Sicherheitsmerkmalen, z.B. einem Hologramm, einem Magnetstreifen, einem Foto des Karteninhabers oder dergleichen versehen ist. In die Smart Card ist herkömmlicherweise ein sogenanntes Modul eingebettet. Das Modul besteht aus einem elektronischen Schaltkreis (Chip) sowie üblicherweise einem Trägerplättchen, auf dem der Chip sitzt. Das Plättchen bildet bei bestimmten Karten mit mehreren Oberflächensegmenten eine segmentierte elektrische Kontaktfläche, die von außen zugänglich ist. Bei anderen Kartenarten sind Antennen in der Karte vorgesehen, um Informationen, z.B. Daten, berührungslos auszutauschen. Derartige Smart Cards werden als Telefonkarten, Berechtigungskarten für mobile Nachrichtengeräte, als Scheckkarten im Geldverkehr, als Berechtigungsnachweise für Krankenkassen oder dergleichen, als Berechtigungsnachweise für den Zugang in bestimmte Gebäude oder Gebäudeteile oder für andere Zwecke, z.B. zur Warensicherung, eingesetzt. Der Benutzer schiebt die Smart Card zu diesen Zwecken in einen Kartenleser oder führt ihn daran vorbei, der über eine entsprechende Kontakt- oder Antenneneinrichtung mit dem elektronischen Schaltkreis in der Smart Card in Verbindung tritt. Auf diese Weise kann z.B. bei einer Telefonkarte oder einer Scheckkarte ein vorhandenes Guthaben überprüft, eine Identität festgestellt oder ein sonstiger Datenaustausch vorgenommen werden.

Darüber hinaus befaßt sich die Erfindung auch mit der Herstellung ähnlicher Karten, die unter der Bezeichnung "Data-Cards" und unter der Bezeichnung "PCMCIA" bekannt sind. Hierbei handelt es sich meist um einseitig oder zweiseitig mit einer Metallfolie kaschierte Karten, meist in der Größe einer Scheckkarte, jedoch von einer etwas größeren Dicke, so daß auch aufwendigere Elektronikkomponenten darin aufgenommen werden können. Derartige Data-Cards dienen unter anderem zur Datenspeicherung und als Berechtigungskarten für höchste Sicherheitsstandards. PCMCIA-Karten werden unter anderem in Notebooks und anderen tragbaren elektronischen Geräten eingesetzt und können beispielsweise ein Modem, eine ISDN-Schnittstelle, zusätzliche Speicherchips oder dergleichen enthalten.

Dabei ist in der Regel an einer Stirnseite der flachen Karte eine Nut ausgebildet, innerhalb derer innenliegend die einzelnen Kontaktsegmente einer Kontaktfläche vorgesehen sind, über die dann beim Einstecken in den sogenannten "PCMCIA-Slot" mit entsprechenden männlichen Kontaktzungen der Kontakt hergestellt wird.

Um Smart Cards zugleich als Werbeträger einsetzen zu können, stellt man diese vorzugsweise dadurch her, daß man eine oder zwei Folien, vorzugsweise sogenannte Label verwendet, die eine oder die beiden flachen Seiten der Smart Card im hergestellten Zustand bilden. Unter einem Label ist dabei eine vorzugsweise einseitig bedruckte Folie zu verstehen. Das Label ist mit dem Werbeaufdruck oder dergleichen versehen. Der Aufdruck muß dabei von hoher Qualität sein. Es hat sich herausgestellt, daß eine bessere Druckqualität dann erreicht wird, wenn die Folie, die das Label bildet, vor der Herstellung der Smart Card bedruckt wird.

Das Label wird zur Herstellung der Smart Card in den Hohlraum eines Kunststoff-Spritzgießwerkzeuges eingelegt. Der Hohlraum hat hierzu eine flache, quaderförmige Gestalt, und die Label werden auf die flachen Oberflächen des Hohlraums aufgelegt. Es ist dabei dafür Sorge zu tragen, daß die Label im Hohlraum sauber positioniert sind und während der Formfüllung ihre Position beibehalten.

Für die Folie des Labels und das einzuspritzende Kunststoffmaterial wird vorzugsweise der gleiche oder ein ähnlicher Kunststoff verwendet, z.B. Polystyrol, Propylen, ABS oder Polycarbonat, damit man nach Beendigung des Einspritzvorganges einen besonders guten Verbund zwischen den Labeln und dem eingespritzten Kunststoff erhält.

Der Begriff "Label" ist in diesem Zusammenhang nur beispielhaft zu verstehen.

Allgemein gesprochen können im Rahmen der vorliegenden Erfindung sowohl zugeschnittene als auch nicht zugeschnittene Folien oder Label verwendet werden. Diese Folien können ein- oder beidseitig bedruckt sein. Sie können auf einer oder mehreren Oberflächen des Verbundkörpers, beispielsweise der Smart Card, angeordnet werden.

Herkömmlicherweise wird das Kunststoffmaterial über einen Angußschlitz im Bereich einer Schmalseite des Hohlraums zwischen die beiden Label eingespritzt.

Im Querschnitt sieht die Smart Card dann so aus, daß die Oberfläche auf der Rückseite durch eines der Label gebildet wird. Auf der Vorderseite, nämlich der Sichtseite, befindet sich die Kontaktfläche, die mit dem Chip zu einem Modul verbunden ist.

Gemäß der eingangs genannten EP 0 399 868 B1 wird der Chip zunächst auf einem Metallband befestigt und verdrahtet. Der Chip wird dann auf dem Metallband in einen Kunststoff eingegossen, so daß ein Modul entsteht, das bereits eine gewisse Dicke aufweist. Das Modul ist so gestaltet, daß seine Dicke der Höhe des Hohlraums im Werkzeug entspricht. Bei geschlossenem Werkzeug wird damit ein Druck auf das Modul ausgeübt, der dieses an einer bestimmten Position im Hohlraum fixiert. Bei einer anderen Ausführungsform des bekannten Verfahrens wird auf ein vorher bedrucktes Label verzichtet und statt dessen ein Bildtransfer-Film in den Hohlraum eingelegt. Das vom Bildtransfer-Film getragene Bild haftet auf dem eingespritzten Kunststoffmaterial. Nach dem Entformen der Smart Card befindet sich der Aufdruck damit auf dem labellosen Kunststoffkörper, und der Bildtransfer-Film kann entfernt werden. Bei Varianten des Herstellungsverfahrens können eine oder beide flachen Seiten der Smart Card durch derartige Filme bedruckt werden. Aber auch die Verwendung von Labeln auf einer oder beiden flachen Seiten ist bei dem bekannten Verfahren möglich. Da bei der Verwendung von Labeln das bekannte Verfahren vorsieht, das Modul auf der Innenseite des Labels anzuordnen, wird das Label an der Auflagestelle des Moduls so weit ausgeschnitten, daß die Kontakte des Moduls von der flachen Seite der fertigen Smart Card her zugänglich sind.

Auf jeden Fall wird jedoch zunächst eine Kontaktfläche hergestellt, die je nach den Erfordernissen in verschiedene Segmente unterteilt ist. Der Chip wird mit dieser segmentierten Kontaktfläche in Verbindung gebracht und mit seinen Anschlüssen auf die einzelnen Segmente der Kontaktfläche von innen aufgelötet bzw. über Kontaktdrähte verbunden. Anschließend wird der Chip zusammen mit der Kontaktfläche in einer Form mit Gießharz umgossen, um das Modul herzustellen, das anschließend zusammen mit den Folien in den Hohlraum eingelegt wird, der dann mit Kunststoffmasse ausgespritzt wird. Meist hängen eine Reihe von Kontaktflächen an einem flachen Metallband oder auf einer elektrisch leitend beschichteten Folie in Form eines Bandes zusammen, auf das die Chips gebondet, anschließend zu Modulen vergossen und schließlich z.B. durch Stanzen voneinander getrennt werden. Die Kontaktierung der Chips auf Bändern ist auch unter der Bezeichnung "Tape-Bonding" bekannt.

Bisher wurde die separate Herstellung eines Moduls mit dem Chip und der Kontaktfläche als notwendig angesehen, um den Chip bei der Herstellung der Smart Card gegen äußere Einflüsse zu schützen und um eine sichere Verbindung mit der Kontaktfläche herzustellen.

Als nachteilig hat sich dabei der zusätzliche Aufwand herausgestellt, der durch die separate Herstellung des Moduls vor der Herstellung der eigentlichen Smart Card bedingt ist.

Ein weiterer Nachteil des bekannten Verfahrens besteht darin, daß bei der Verwendung von zwei Labeln oder Folien zwei separate Elemente in den Hohlraum des Werkzeugs eingeführt werden müssen. Da Smart Cards nur Kantenlängen von wenigen Zentimetern aufweisen, sind die Label bzw. Folien relativ weiche und instabile Gebilde, weil diese sehr dünn sind. Eine präzise Handhabung und Positionierung ist schwierig. Das gilt insbesondere dann, wenn niedrige Zykluszeiten angestrebt werden, die naturgemäß mit hohen Verfahrgeschwindigkeiten sowie hohen Beschleunigungen bzw. Verzögerungen des Handlingsgerätes verbunden sind. Die relativ weichen und instabilen Folien können sich dabei durch Massenträgheitskräfte verbiegen, umklappen oder auf andere Weise ihre Lage verändern, so daß die Gefahr besteht, daß ein zu hoher Prozentsatz an Ausschuß produziert wird.

Aus dem Dokument US 5 417 905 A ist ein Verfahren zum Herstellen einer Karte mit dekorierten Oberflächen bekannt. Bei dem bekannten Verfahren wird ein Modul verwendet, das auf einer Trägerfolie angeordnet und mit dieser in einen Hohlraum eines Spritzgießwerkzeugs eingesetzt wird. Um das Modul während des Einspritzvorganges unverrückbar im Hohlraum zu halten, wird über einen in das Werkzeug eingearbeiteten Stempel ein Anpreßdruck auf das Modul ausgeübt, indem das Modul gegen die gegenüberliegende Seite des flachen Formhohlraums gedrückt wird. Auf diese Weise soll ferner verhindert werden, daß das eingespritzte flüssige Kunststoffmaterial zwischen die Oberseite des Moduls, an der sich Kontaktsegmente befinden, und der daneben liegenden Wand des Formhohlraums eindringt, so daß bei der fertig gespritzten Karte die Kontakte durch Kunststoffmaterial überdeckt oder zumindest verunreinigt wären.

Aus dem Dokument US 4 625 102 A ist ein Verfahren zum Herstellen einer sogenannten Memory Card bekannt. Bei diesem Verfahren wird ein Modul mit einem Chip verwendet, wobei der Chip über herkömmliche Bond-Drähte mit Kontaktsegmenten an der Kartenoberfläche verbunden und das Gebilde aus Chip und Bond-Drähten mit Kunststoff umgeben wird, ehe die Karte hergestellt wird.

Aus dem Dokument EP 0 649 719 A1 ist ein Verfahren zur Herstellung von Chipkarten mittels Spritzgießen bekannt. Bei diesem bekannten Verfahren wird ebenfalls ein Modul verwendet, das aus einem Halbleiter besteht, der auf einem Leadframe montiert und über Bond-Drähte elektrisch angeschlossen ist. An dem in der Regel quaderförmigen Modul befinden sich somit an dessen Unterseite flächig ausgebildete Kontakte bzw. Anschlußflächen. Das Modul wird auf ein Trägerband aufgesetzt und zusammen mit diesem in einen Hohlraum eines Spritzgießwerkzeugs eingesetzt und dort umspritzt.

Aus dem Dokument WO 92/13318 A1 ist ein Trägerelement für integrierte Halbleiter-Schaltkreise, insbesondere zum Einbau in Chip-Karten bekannt. Auch bei diesem Trägerelement wird ein vorgefertigtes Modul der bereits beschriebenen Art verwendet.

Entsprechendes gilt für ein für einen IC-Chip vorgesehenes Trägerelement, das in dem Dokument US 4 476 292 A beschrieben ist. Bei dieser bekannten Anordnung wird ein Halbleiterchip in eine Aussparung eines Films eingesetzt und über selbsttragende Bond-Drähte mit Kontaktflächen an der Oberfläche des Films verbunden. Danach wird bei einem Ausführungsbeispiel der Halbleiterchip in der Aussparung mit Kunststoff vergossen.

Der Erfindung liegt demnach die Aufgabe zugrunde, ein Verfahren zur Herstellung eines Verbundkörpers und einen Verbundkörper gemäß der eingangs genannten Art dahingehend weiterzubilden, daß die genannten Nachteile vermieden werden. Insbesondere sollen die Arbeitsschritte bei der Herstellung des Verbundkörpers soweit wie möglich vereinfacht werden und eine kostengünstige Herstellung ermöglicht werden.

Bei einem Verfahren der eingangs genannten Art wird diese Aufgabe erfindungsgemäß dadurch gelöst, daß die Kontaktierung während des Spritzgießvorganges fixiert wird.

Bei dem Kunststoff-Spritzgießwerkzeug der eingangs genannten Art wird die der Erfindung zugrunde liegende Aufgabe dadurch gelöst, daß in einer Werkzeughälfte eine in eine Oberfläche des Hohlraums mündende Bohrung vorgesehen ist, in der ein Stempel beweglich geführt ist, der zur Vernietung eines von dem Chip hervorstehenden Nietes mit einer in den Hohlraum eingelegten Folie ausgebildet ist.

Die Aufgabe der Erfindung wird auf diese Weise vollkommen gelöst.

Durch die Erfindung wird nämlich erreicht, daß das Vergießen des Chips mit einer Kontaktfläche zu einem Modul überflüssig wird. Dennoch wird eine exakte und zuverlässige Kontaktierung zwischen Chip und einer Oberfläche des Verbundkörpers beim Ausspritzen des Hohlraums des Kunststoff-Spritzgießwerkzeuges sichergestellt.

Erfindungsgemäß wird somit die Herstellung erheblich vereinfacht, da mehrere Arbeitsgänge eingespart werden, und gleichzeitig ist es nur noch erforderlich, den Chip selbst exakt in den Hohlraum einzubringen und beim Spritzgießvorgang zu halten.

Die Kontaktierung wird erfindungsgemäß während des Spritzgießvorgangs fixiert, d.h. endgültig festgelegt, während die betreffenden Teile, die zur Kontaktierung führen, gegebenenfalls zuvor schon lose zusammengelegt sein können.

Auf jeden Fall ist es möglich, den Chip unmittelbar in die Kunststoffmasse vor oder während des Spritzgießvorgangs einzubringen, ohne daß eine vorherige Modulherstellung durch Vergießen mit einer Kontaktfläche erforderlich ist.

Im Rahmen der Erfindung ist der Begriff "Chip" sehr weit zu aufzufassen, so daß auch einzelne elektronische Bauteile oder größere Baugruppen mit dieser Bezeichnung umfaßt sind. Während man üblicherweise unter Bezeichnung "Chip" einen elektronischen Schaltkreis versteht, dessen Kontakte mit Kontaktzungen oder Anschlußbeinen gebondet sind und bei dem das eigentliche Halbleitersubstrat ("Wafer" bzw. "Die") vollständig gekapselt in einem Kunststoffgehäuse vergossen ist, ist es im Rahmen der Erfindung auch vorgesehen, Chips zu verwenden, die noch nicht in ein Kunststoffgehäuse eingebettet sind.

Erfindungsgemäß ist es grundsätzlich bevorzugt, bereits das Halbleiterbauteil, das mit Kontaktpunkten an seiner Oberfläche versehen ist, in den Kunststoffkörper einzubetten, ohne daß das Halbleiterbauteil zuvor mit einer Kunststoffmasse ummantelt wird.

Dies führt erfindungsgemäß zu einer Einsparung von zusätzlichen Arbeitsschritten (Gehäuseherstellung bzw. Modulherstellung) und führt somit zu erheblicher Zeit- und Kostenersparnis, während darüber hinaus sogar kleinere Baugrößen möglich werden, da auf die separate Gehäuseherstellung des Chips bzw. die Modulherstellung verzichtet wird.

Bei einer bevorzugten Weiterbildung des erfindungsgemäßen Verfahrens werden der Chip und die Kontaktsegmente in der bereits beschriebenen Weise zunächst lose zusammengelegt und dann während des Spritzgießvorganges durch das Fixieren endgültig festgelegt.

Bei weiteren Ausführungsformen der Erfindung findet das Fixieren auf unterschiedliche Weise statt.

Bei einer ersten Variante wird die Kontaktierung während des Spritzgießvorganges durch Anlage unter Druck fixiert, während bei einer zweiten Variante dies durch Verlöten und bei einer dritten Variante durch Vernieten erreicht wird. Wenn die Kontaktierung durch Verlöten fixiert wird, ist besonders bevorzugt, das Verlöten unter der Wärmeeinwirkung des Spritzgießvorganges erfolgen zu lassen.

In zusätzlicher Weiterbildung der Erfindung wird die Kontaktierung selbst während des Spritzgießvorgangs erzeugt.

Diese Maßnahme hat den Vorteil, daß ein weiterer Arbeitsgang, nämlich die separate Herstellung einer Kontaktierung, überflüssig wird. Somit ergibt sich eine weitere Verkürzung der Zykluszeit und damit eine erhebliche Kosteneinsparung.

In zusätzlicher Weiterbildung der Erfindung wird der Chip an einer Folie befestigt, die eine flache Seite des Verbundkörpers bildet, und gemeinsam mit der Folie in den Hohlraum des Kunststoff-Spritzgießwerkzeuges eingebracht.

Die Positionierung der aus Folie und Chip gebildeten Einheit kann dabei in herkömmlicher Weise durch Anlegen eines Unterdrucks, durch elektrostatische Kräfte oder dergleichen erreicht werden. Die Lage des Chips ist dabei von selbst mit gewährleistet, weil der Chip fest mit der Folie verbunden ist.

Es ist daher im Gegensatz zum Stand der Technik weder erforderlich, zwei Positionierungsvorgänge vorzunehmen, nämlich einmal für die Folie und einmal für das Modul, und es müssen auch keine weiteren Maßnahmen getroffen werden, um das Modul an Ort und Stelle zu halten. Dabei wird erreicht, daß die Lage des Chips an der Folie und damit im Hohlraum auch während des Schließvorganges des Werkzeugs garantiert wird. Die Befestigung des Chips an der Folie kann darüber hinaus so dauerhaft und widerstandsfähig ausgebildet werden, daß auch während des Einspritzvorgangs keine weiteren Maßnahmen zur Halterung des Chips an der vorbestimmten Position erforderlich sind.

Ein weiterer Vorteil der Erfindung besteht darin, daß dadurch, daß Chip und Folie zu einer Einheit verbunden sind, das Handling beim Einlegen der Folie und des Chips in das Kunststoff-Spritzgießwerkzeug einerseits und das Entnehmen des fertig gespritzten Verbundkörpers aus dem Kunststoff-Spritzgießwerkzeug andererseits erheblich vereinfacht wird. Es wird erfindungsgemäß nämlich ermöglicht, daß ein zwischen die beiden Werkzeughälften einfahrender Roboter gleichzeitig einen Rohling in eine der Werkzeughälften einlegt und das aus einer anderen Werkzeughälfte ausgeworfene Fertigteil beim Ausfahren aus dem Kunststoff-Spritzgießwerkzeug mitnimmt.

Dadurch wird eine erhebliche Verkürzung der Zykluszeit und somit ein deutlicher Kostenvorteil erreicht.

Bei einer alternativen Ausführung der Erfindung wird der Chip nicht mit einer Folie vor Beginn des Spritzgießvorgangs verbunden, sondern an einem Teil des Kunststoff-Spritzgießwerkzeuges z.B. durch Kleben befestigt, bevor der Hohlraum des Kunststoff-Spritzgießwerkzeuges mit Kunststoffmasse ausgespritzt wird. Der Kleber kann sich dabei etwa bei der erhöhten Spritzgießtemperatur thermisch auflösen, so daß das Fertigteil nach Beendigung des Spritzgießvorgangs einfach ausgeworfen werden kann.

In einer bevorzugten Ausführung der Erfindung wird der Chip über Kontaktpunkte an seiner Oberfläche elektrisch leitend mit der Kontaktfläche verbunden.

Diese Maßnahme hat den Vorteil, daß die Kontaktpunkte geometrisch entsprechend angepaßt werden können, um unmittelbar durch Verlötung oder durch Anlage unter Druck mit einer entsprechend gestalteten Gegenkontaktfläche eine elektrisch leitende Verbindung herzustellen oder um eine Durchführung der Kontaktpunkte durch entsprechende Ausnehmungen in der Folie nach außen zu ermöglichen. Somit kann in einfacher Weise eine elektrisch leitende Verbindung zur Kontaktfläche hergestellt werden, ohne daß ein aufwendiger Bonding-Prozeß wie im Stand der Technik erforderlich ist, bei dem feine Drähte mit den Kontaktpunkten auf dem Halbleitersubstrat durch Bonding verbunden werden.

Es versteht sich, daß unter der Bezeichnung "Kontaktpunkt" beliebige Kontaktstellen an der Oberfläche des Chips zu verstehen sind, deren tatsächliche Ausführung in weiten Grenzen variieren kann und vom Chiphersteller einerseits vorgegeben sein kann, aber insbesondere auch an die jeweilige spezielle Ausführung des Verbundkörpers angepaßt sein kann. In der Regel werden die Kontaktpunkte jedoch so ausgebildet sein, daß sie eine gewisse Druckbelastung ermöglichen und gegebenenfalls mittels eines sehr niedrigschmelzenden Lotes verlötet bzw. gebondet werden können.

Die Kontaktfläche selbst kann grundsätzlich sowohl vor als auch nach dem Spritzgießvorgang erzeugt werden. Eine Erzeugung nach dem Spritzgießvorgang ist besonders bevorzugt, da während des Spritzgießvorgangs die Fixierung der Kontaktierung, d.h. die elektrisch leitende Verbindung zwischen den Kontaktpunkten und der Außenseite des Verbundkörpers, erfolgt, und somit nach dem Spritzgießen die Kontaktfläche auf besonders einfache Weise hergestellt und mit der Kontaktierung gleichzeitig verbunden werden kann. Darüber hinaus kann in zusätzlicher Weiterbildung der Erfindung die Kontaktierung, d.h. die elektrische Verbindung zwischen den Kontaktpunkten und der Kontaktfläche, die während des Spritzgießvorgangs lediglich fixiert wurde, komplettiert oder vervollständigt werden.

In bevorzugter Weiterbildung der Erfindung werden in der Folie Ausnehmungen erzeugt, in die die Kontaktpunkte eingesteckt werden, um eine elektrisch leitende Verbindung zur Außenfläche der Folie herzustellen.

Durch diese Maßnahme wird eine besonders einfache Verbindung zwischen dem Chip und der Kontaktfläche auf der Oberfläche des Verbundkörpers ermöglicht.

Hierbei können die Kontaktpunkte stiftartig ausgebildet sein, je nach den geometrischen Erfordernissen jedoch auch kegelförmig, quaderförmig oder andersgeartet ausgebildet sein.

In bevorzugter Weiterbildung der Erfindung sind die Kontaktpunkte als Niete ausgebildet, die beim Spritzgießvorgang mit der Folie vernietet werden.

Auf diese Weise wird beim Spritzgießvorgang gleichzeitig eine dauerhafte und beständige Kontaktierung erreicht und der Chip zusätzlich an der Folie befestigt. Vorzugsweise sind hierbei die Kontaktpunkte als Hohlniete ausgebildet, die beim Spritzgießvorgang durch entsprechend geformte Stempel am Kunststoff-Spritzgießwerkzeug aufgenietet werden.

In weiterer Ausgestaltung der Erfindung ist bevorzugt, daß der Chip bereits durch Einstecken seiner Kontaktpunkte in die Ausnehmungen an der Folie befestigt wird.

Auf diese Weise wird der Herstellungsprozeß besonders einfach gestaltet, da zusätzliche Klebevorgänge und dergleichen entfallen. Dabei kann der Chip bereits durch Einstecken seiner Kontaktpunkte in die entsprechenden Ausnehmungen der Folie daran verrastet werden. In alternativer Weise kann es sich auch nur um eine lose Verbindung des Chips mit der Folie handeln, wobei der Chip dann vorzugsweise von oben auf die Folie aufgelegt wird und dann gemeinsam mit dieser in den Formhohlraum eingebracht wird.

In zusätzlicher Weiterbildung der Erfindung kann der Chip natürlich auch mit der Folie verklebt oder über seine Kontaktpunkte mit der Folie verlötet werden.

Auf diese Weise wird auch dann, wenn eine Befestigung über ein Einstecken der Kontaktpunkte in Öffnungen der Folie nicht ausreichend ist, eine für den nachfolgenden Spritzgießvorgang ausreichend sichere Verbindung des Chips mit der Folie gewährleistet.

In alternativer Weise kann der Chip an der Folie auch unter Federspannung befestigt werden.

Dies setzt voraus, daß die Folie eine ausreichende Steifigkeit aufweist, was insbesondere bei einer Metallfolie der Fall ist.

Die Verwendung einer Metallfolie hat den zusätzlichen Vorteil, daß diese gleichzeitig als Abschirmung gegen elektromagnetische Strahlen wirkt und insbesondere bei qualitativ hochwertigen Karten bevorzugt ist, was auch einen höheren Verkaufspreis für derartige Karten ermöglicht.

Darüber hinaus können in zusätzlicher Weiterbildung der Erfindung auf der Metallfolie Kontaktsegmente erzeugt werden.

Auf diese Weise kann die Metallfolie selbst zur Herstellung der Kontaktfläche benutzt werden, was eine weitere Vereinfachung bedeutet.

Hierbei können einzelne Kontaktsegmente vor dem Befestigen des Chips erzeugt werden, was z.B. durch Ätzen oder durch LaserSchneiden erfolgen kann. Jedoch ist es auch denkbar, am fertig gespritzten Verbundkörper einzelne Kontaktsegmente beispielsweise mittels eines Lasers auszuschneiden oder durch Ätzen eine derartige Trennung herbeizuführen.

In bevorzugter Weiterbildung der Erfindung wird die Kontaktfläche auf der Oberfläche der Folie durch Aufdrucken, durch galvanisches Auftragen oder Aufdampfen eines elektrisch leitfähigen Werkzeugstoffes erzeugt.

Als besonders kostengünstiges Verfahren hat sich hierbei das Bedrucken mittels leitfähiger Paste erwiesen, um die segmentierte Kontaktfläche zu erzeugen. In alternativer Weise kann die Kontaktfläche natürlich auch durch galvanische Verfahren oder durch Abscheidung aus der Gasphase auf der Oberfläche der Folie erzeugt werden.

In zusätzlicher Weiterbildung dieser Ausführung wird die Kontaktfläche unmittelbar auf den Kontaktpunkten erzeugt.

Auf diese Weise wird z.B. durch Aufdrucken oder durch Aufgalvanisieren einer entsprechenden Schicht auf die Enden der Kontaktpunkte, die durch Öffnungen in der Folie nach außen hervorstehen, die Kontaktfläche in besonders einfacher Weise unmittelbar auf der Folie oder auf der Oberfläche des Verbundkörpers erzeugt, die mit der Kunststoffmasse beim Spritzgießvorgang ausgefüllt ist, ohne daß hierzu eine zusätzliche elektrische Kontaktierung vorgenommen werden muß.

In zusätzlicher Weiterbildung der Erfindung werden die Kontaktpunkte beim Aufdrucken der Kontaktfläche plastisch verformt.

Diese Maßnahme hat den Vorteil, daß gleichzeitig beim Aufdruckvorgang eine zusätzliche mechanische Befestigung der Kontaktfläche auf der Außenfläche der Folie erreicht werden kann.

Gemäß einer weiteren Variante der Erfindung wird der Chip an der Folie mit Hilfe eines Trägerkörpers festgelegt.

Je nach Ausgestaltung des Trägerkörpers kann hierdurch ein mechanischer oder auch ein thermischer Schutz des Chips beim nachfolgenden Spritzvorgang beim Ausspritzen des Hohlraums des Kunststoff-Spritzgießwerkzeuges erreicht werden. Andererseits kann die Befestigung des Chips an der Folie vereinfacht werden und für den Spritzvorgang besonders beständig gestaltet werden.

In zusätzlicher Weiterbildung der Erfindung wird die Folie mit einer zweiten Folie zu einem Sandwich verbunden.

Soweit auf beiden flachen Seiten des Verbundkörpers ein Abschluß durch eine Folie vorgesehen ist, ergibt sich auf diese Weise eine zusätzliche Vereinfachung beim Handling des Rohlings beim Einlegen in das Kunststoff-Spritzgießwerkzeug.

Die Verbindung der beiden Folien kann hierbei etwa durch Klebepunkte vorgenommen werden.

Bei dieser Ausführung kann zusätzlich auch der Chip an der gegenüberliegenden Folie durch einen Klebepunkt fixiert werden, wodurch auf besonders einfache Weise eine Befestigung und Positionierung des Chips gewährleistet werden kann.

Gemäß einer weiteren Variante der Erfindung wird der Chip mit Kontaktflächen an beiden flachen Seiten des Verbundkörpers oder an einer Stirnseite des Verbundkörpers verbunden.

Auf diese Weise lassen sich mit dem erfindungsgemäßen Verfahren Smart Cards mit Kontaktflächen auf beiden Seiten oder auch Data-Cards oder PCMCIA-Cards erzeugen, bei denen die Kontaktflächen in der Regel stirnseitig in Nuten innenliegend angeordnet sind.

Gemäß einer weiteren Variante der Erfindung wird der Chip mit dem Trägerkörper verklebt, seine Kontaktpunkte mit dem Trägerkörper verlötet, oder der Chip wird zwischen Folie und Trägerkörper formschlüssig eingeschlossen oder am Trägerkörper unter Federspannung befestigt.

Durch Verklebung oder Verlötung wird eine zuverlässige und dauerhafte Festlegung des Trägerkörpers an der Folie erreicht. Soweit der Chip dabei gleichzeitig zwischen Folie und Trägerkörper formschlüssig eingeschlossen wird, ist eine zusätzliche Befestigung des Chips nicht erforderlich. Wird dagegen der Chip am Trägerkörper unter Federspannung befestigt, so ergibt sich auf besonders einfache Weise eine für den Spritzgießvorgang ausreichende Befestigung des Chips am Trägerkörper, wenn dieser ausreichend steif ausgebildet ist.

Gemäß einer weiteren Variante der Erfindung wird der Trägerkörper in einer Ausnehmung der Folie unter Federspannung befestigt.

Darüber hinaus kann der Trägerkörper mit der Folie verklebt oder verlötet werden.

Auf diese Weise ergibt sich eine besonders einfache Befestigung des Trägerkörpers an der Folie.

Soweit der Trägerkörper an der Folie befestigt wird, wird dabei vorzugsweise gleichzeitig der Chip zwischen Folie und Trägerkörper formschlüssig eingeschlossen, um so eine Vereinfachung der Befestigung zu erreichen.

Gemäß einer weiteren Ausführung der Erfindung werden die Kontaktpunkte des Chips über den Trägerkörper mit der Kontaktfläche elektrisch verbunden.

Diese Maßnahme hat den Vorteil, daß bei den Ausführungen, bei denen eine Befestigung des Chips an der Folie mit Hilfe eines Trägerkörpers vorgenommen wird, der Trägerkörper gleichzeitig zur elektrischen Verbindung des Chips mit der Kontaktfläche genutzt wird, wodurch eine zusätzliche elektrische Kontaktierung vermieden wird.

Soweit der Trägerkörper mit der Folie oder Kontaktpunkte des Chips mit der Folie oder dem Trägerkörper verlötet werden, erfolgt diese Verlötung in vorteilhafter Weiterbildung der Erfindung unter der Wärmeeinwirkung des Spritzgießvorgangs.

Diese Maßnahme hat den Vorteil, daß ein zusätzlicher Arbeitsgang entfällt, was eine entsprechende Verfahrensvereinfachung bedeutet. Es versteht sich, daß dies natürlich nur dann möglich ist, wenn die Verlötung nicht gleichzeitig zur Befestigung des betreffenden Teiles dient.

In weiter vorteilhafter Ausgestaltung der Erfindung wird der Chip in einem topfartig ausgebildeten Trägerkörper aufgenommen, der an der Folie befestigt wird.

Auf diese Weise ergibt sich ein besonders vorteilhafter mechanischer und thermischer Schutz des Chips beim späteren Ausspritzen des Hohlraums mit heißer Kunststoffmasse.

Dabei kann der topfartige Trägerkörper zuvor beispielsweise mittels seines Randes mit der Folie verklebt oder gegebenenfalls mit metallisierten Flächen an der Unterseite der Folie verlötet werden.

Auf eine gesonderte Verlötung der Kontaktpunkte des Chips mit den entsprechenden Kontaktsegmenten kann hierbei in der Regel verzichtet werden, da hierzu bei ausreichend präziser Dimensionierung einerseits der von der Spritzgießmasse ausgeübte Druck auf den Trägerkörper ausreichen kann, um eine Anlage der Kontaktpunkte unter Druck an den entsprechenden Kontaktsegmenten zu gewährleisten oder um gegebenenfalls bei der erhöhten Spritzgießtemperatur ein Aufschmelzen eines Lotes an den Kontaktpunkten bzw. an den entsprechenden Kontaktsegmenten zu gewährleisten und somit im Ergebnis eine Verlötung während des Spritzgießvorgangs zu bewirken.

Anstelle eines topfartigen Trägerkörpers kann auch ein flanschartiger Trägerkörper verwendet werden, der den Chip an seinen Seitenflächen zumindest teilweise umschließt und mit dem der Chip mittels an seinen Seitenflächen vorgesehener Kontaktpunkte über den Trägerkörper mit der Kontaktfläche in Verbindung steht.

Der Trägerkörper kann also - soweit gewünscht - gleichzeitig zur Herstellung einer elektrischen Verbindung zwischen dem Chip und den entsprechenden Kontaktsegmenten der Innenkontaktfläche verwendet werden.

Diese Maßnahme hat den Vorteil, daß eine besonders innige Verbindung zwischen Trägerkörper und Chip durch die umgebende Kunststoffmasse erreicht wird.

Der Trägerkörper besteht in vorteilhafter Weiterbildung der Erfindung aus einem Metall.

Durch diese Maßnahme kann der Trägerkörper selbst, wie zuvor bereits erwähnt, zur Herstellung einer elektrisch leitenden Verbindung zwischen dem Chip und der Kontaktfläche genutzt werden. Des weiteren hat die Ausbildung des Kontaktkörpers aus einem Metall den Vorteil einer plastischen Verformbarkeit während des Spritzgießvorgangs, sofern ein ausreichend duktiler Werkstoff verwendet wird, wodurch ein Andruck des Chips mit seinen Kontaktpunkten an die entsprechenden Kontaktsegmente unterstützt wird. Andererseits kann ein Trägerkörper aus Metall durch Verzinnen oder dergleichen zu einer späteren Verlötung besonders einfach vorbereitet werden.

In alternativer Weise kann der Trägerkörper auch aus einem zumindest teilweise metallisierten Kunststoff bestehen.

Hierdurch ergibt sich teilweise eine kostengünstigere Herstellung, wobei darüber hinaus insbesondere bei den Ausführungen, bei denen der Chip von dem Trägerkörper weitgehend umschlossen ist, ein verbesserter thermischer Schutz des Chips beim nachfolgenden Spritzgießvorgang erreicht wird, da das Grundmaterial des Trägerkörpers, Kunststoff, schlechter wärmeleitend als ein Metall ist.

Der Trägerkörper kann in vorteilhafter Weise in Kontaktsegmente unterteilt sein, um eine elektrisch leitende Verbindung zwischen dem Chip und der Kontaktfläche zur Verfügung zu stellen.

In einer weiteren Ausgestaltung der Erfindung ist in der Folie eine Ausnehmung vorgesehen, die einen nach innen weisenden hülsenförmigen Fortsatz aufweist, innerhalb dessen der Chip stirnseitig mit seinen Kontaktpunkten gehalten ist.

Auf diese Weise ergibt sich eine besonders einfache unmittelbare Befestigung des Chips an der Folie, da auf die zusätzliche Verwendung eines Trägerkörpers verzichtet werden kann und der Chip einfach unter Federspannung in dem hülsenförmigen Fortsatz der Folie gehalten ist.

Soweit ein Trägerkörper verwendet wird, kann dieser einerseits auf der Innenseite der Folie anliegen oder andererseits mit einem äußeren Teil auf der Außenseite der Folie anliegen.

Im ersten Fall wird der Trägerkörper vorzugsweise mit der Innenseite der Folie verklebt sein oder durch einen Klebepunkt an einer gegenüberliegenden zweiten Folie gehalten sein. Im zweiten Fall kann der Trägerkörper an der Ausnehmung der Folie unter Federspannung gehalten sein oder gegebenenfalls auf die Außenseite der Folie aufgeklebt sein.

Gemäß einer weiteren Variante der Erfindung ist der Chip innerhalb eines röhrchenförmig ausgebildeten Trägerkörpers aufgenommen, der an beiden Enden mit den Folien verbunden wird.

Auf diese Weise ist eine vollständige Kapselung des Chips ermöglicht, was insbesondere bei besonders empfindlichen Chips von Vorteil ist.

Soweit zwischen Trägerkörper und Chip ein Zwischenraum vor dem Spritzgießvorgang vorhanden ist, wird dieser vorzugsweise während des Spritzgießvorgangs mit der Kunststoffmasse ausgefüllt.

Auf diese Weise ergibt sich eine dauerhafte Kapselung des Chips und eine einheitliche, glatte Oberfläche des Verbundkörpers.

Gemäß einer weiteren Ausgestaltung der Erfindung ist an der Innenseite der Folie eine Innenkontaktfläche vorgesehen, die mit der Kontaktfläche elektrisch verbunden ist, und mit der die Kontaktpunkte des Chips oder der Trägerkörper elektrisch leitend verbunden sind.

Auch diese Innenkontaktfläche kann durch Aufdrucken, auf galvanischem Wege oder durch Aufdampfen erzeugt werden, wobei gleichzeitig eine elektrisch leitfähige Verbindung zur Kontaktfläche auf der Außenseite des Verbundkörpers hergestellt werden kann, was gleichzeitig mit der Aufbringung der Kontaktfläche oder der Innenkontaktfläche durch entsprechende Bohrungen erfolgen kann.

Diese Ausführung ist insbesondere dann vorteilhaft, wenn der Chip mit seinen Kontaktpunkten unmittelbar auf der Innenkontaktfläche anliegt oder aber ein Trägerkörper mit dieser elektrisch leitend verbunden wird.

Gemäß einem weiteren Vorschlag der Erfindung wird auf die Außenseite der Folie eine verschleißfeste Beschichtung aufgebracht oder die Folie oberflächenbehandelt, um die Verschleißfestigkeit zu erhöhen.

Die verschleißfeste Beschichtung kann dabei beispielsweise aus einer keramischen Schicht bestehen. Soweit als Folie eine Metallfolie verwendet wird, kann diese beispielsweise eloxiert werden, um eine höhere Verschleißfestigkeit zu erhalten.

Auf diese Weise ist ein besserer mechanischer Schutz des Verbundkörpers gewährleistet.

Ein zur Herstellung erfindungsgemäßer Verbundkörper besonders geeignetes Kunststoff-Spritzgießwerkzeug umfaßt zwei bewegliche Werkzeughälften, zwischen denen ein Hohlraum gebildet ist, in den flüssige Kunststoffmasse einspritzbar ist, sowie eine Zuführund Entnahmeeinrichtung zum Einlegen von Rohteilen in den Hohlraum und zum Entnehmen der Verbundteile nach Beendigung des Spritzgießvorgangs, wobei die Zuführ- und Entnahmeeinrichtung eine zwischen die geöffneten Werkzeughälften einfahrbare Zunge aufweist, die sowohl zur Zuführung eines Rohteils als auch zur Mitnahme eines fertig gespritzten Verbundkörpers ausgebildet ist.

Werden die Rohteile so vorbereitet, wie zuvor bereits erläutert, daß ein Verbund aus mindestens einer Folie und einem Chip gebildet ist, so wird mit einem derartigen Kunststoff-Spritzgießwerkzeug eine erheblich verkürzte Zykluszeit und ein einfacherer Aufbau des Spritzgießwerkzeuges ermöglicht, da ein und dieselbe Zunge gleichzeitig ein Rohteil zuführen und ein Fertigteil entnehmen kann.

In bevorzugter Weiterbildung der Erfindung, die auch als selbständig schutzfähig anzusehen ist, weist eine Werkzeughälfte des Spritzgießwerkzeuges eine in eine Oberfläche des Hohlraums mündende Bohrung auf, in der ein Stempel beweglich geführt ist, der zur Vernietung eines von dem Chip hervorstehenden Nietes mit einer in den Hohlraum eingelegten Folie ausgebildet ist.

Auf diese Weise läßt sich der Vorgang des Vernietens und damit der Kontaktierung mit dem Spritzgießvorgang miteinander koppeln, so daß mit einem derartigen Spritzgießwerkzeug wiederum eine verkürzte Fertigungszeit bei der Herstellung insbesondere von Smart Cards, Data Cards und PCMCIA-Cards ermöglicht wird.

Es versteht sich, daß die vorstehend genannten und die nachstehend noch zu erläuternden Merkmale der Erfindung nicht nur in der jeweils angegebenen Kombination, sondern auch in anderen Kombinationen, oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Darin zeigen:
- Fig. 1: eine schematische Ansicht eines erfindungsgemäßen Verbundkörpers am Beispiel einer Smart Card;
- Fig. 2: eine schematisierte Ansicht eines Kunststoff-Spritzgießwerkzeugs mit zwei Werkzeughälften, wie es zur Herstellung von Smart Cards gemäß Fig. 1 Verwendung finden kann, in einer ersten Arbeitsphase;
- Fig. 3: eine Darstellung, ähnlich Fig. 2, jedoch für eine zweite Arbeitsphase des Kunststoff-Spritzgießwerkzeugs;
- Fig. 4: eine Darstellung, ähnlich Fig. 2, jedoch für eine dritte Arbeitsphase des Kunststoff-Spritzgießwerkzeugs;
- Fig. 5: eine erste Ausführung eines erfindungsgemäßen Verbundkörpers in einer stark vergrößerten Schnittdarstellung;
- Fig. 6: eine nochmals vergrößerte Darstellung, die einen Ausschnitt des Verbundkörpers im Bereich eines Kontaktpunktes mit dem zugehörigen Stempel eines Kunststoff-Spritzgießwerkzeuges zeigt;
- Fig. 7: eine weitere Variante eines erfindungsgemäßen Verbundkörpers in geschnittener Darstellung;
- Fig. 8: eine weitere Alternative eines erfindungsgemäßen Verbundkörpers, der nur auf einer Seite von einer Folie begrenzt ist und wobei der Chip stirnseitig zwischen nach innen weisenden Fortsätzen der Folie aufgenommen ist;
- Fig. 9: eine weitere Abwandlung der Erfindung, bei der der Chip an einer Metallfolie befestigt ist;
- Fig. 10: eine weitere Variante der Erfindung, bei der der Chip von einem topfförmigen Trägerkörper umschlossen ist, der an der Innenseite der Folie befestigt ist;
- Fig. 11: eine äußerst schematische Darstellung einer weiteren Variante der Erfindung, wobei der Chip in einer Ausnehmung der Folie eingeklipst ist und während des Spritzgießvorgangs durch einen Stempel des schematisch angedeuteten Spritzgießwerkzeuges von außen in die Kunststoffmasse eingedrückt wird;
- Fig. 12 - 18: weitere Varianten eines erfindungsgemäßen Verbundkörpers in schematischer, geschnittener Darstellung im vergrößerten Maßstab.

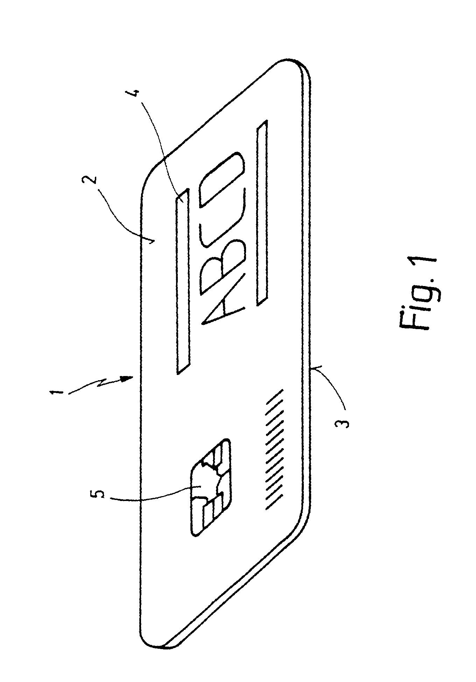

In Fig. 1 bezeichnet 1 insgesamt einen erfindungsgemäßen Verbundkörper am Beispiel einer Smart Card. Hierunter versteht man eine Kunststoffkarte, die üblicherweise mit Hinweis- und/oder Werbeaufdrucken, mit Hologrammen, Magnetstreifen, Sicherheitsmerkmalen oder dergleichen versehen ist. In die Smart Card ist ein elektronischer Schaltkreis eingebettet, der von außen über eine segmentierte elektrische Kontaktfläche zugänglich ist. Derartige Smart Cards werden in großem Umfang als Telefonkarten, Berechtigungskarten für mobile Nachrichtengeräte, als Scheckkarten im Geldverkehr, als Berechtigungsnachweise für Krankenkassen und dergleichen oder als Berechtigungsnachweise für den Zugang in bestimmte Gebäude oder Gebäudeteile usw. eingesetzt. Der Benutzer schiebt die Smart Card zu diesen Zwecken in einen Kartenleser, der über eine entsprechende Kontakteinrichtung mit dem elektronischen Schaltkreis in der Smart Card in Verbindung tritt. Auf diese Weise kann ein vorhandenes Guthaben überprüft, eine Identität festgestellt oder ein sonstiger Datenaustausch vorgenommen werden.

Der Verbundkörper 1 ist auf seiner oberen Oberfläche 2 und/oder auf seiner unteren Oberfläche 3 mit einem Aufdruck 4 versehen. Der Aufdruck 4 kann ein Werbeaufdruck sein oder Gebrauchshinweise enthalten. Für den Aufdruck 4 wird eine äußerst gute Wiedergabequalität verlangt, insbesondere dann, wenn Werbeaufdrucke oder Hologramme vorgesehen sind.

An einer vorbestimmten Stelle des Verbundkörpers 1 ist eine Kontaktfläche 5 vorgesehen, die in der Regel aus einzelnen Kontaktsegmenten besteht, wie in Fig. 1 schematisch angedeutet.

Der Verbundkörper 1 ist an seiner ersten Oberfläche 2, die die Oberseite der Smart Card bildet, und an seiner gegenüberliegenden Oberfläche 3 jeweils durch eine Folie begrenzt. Innerhalb des Verbundkörpers 1 ist ein Chip mit einer elektronischen Schaltung eingebettet, der mit der Kontaktfläche 5 an der Oberfläche 2 der Folie elektrisch verbunden ist.

Der verbleibende Hohlraum zwischen den Folien und dem Chip ist mit einer Kunststoffmasse ausgefüllt.

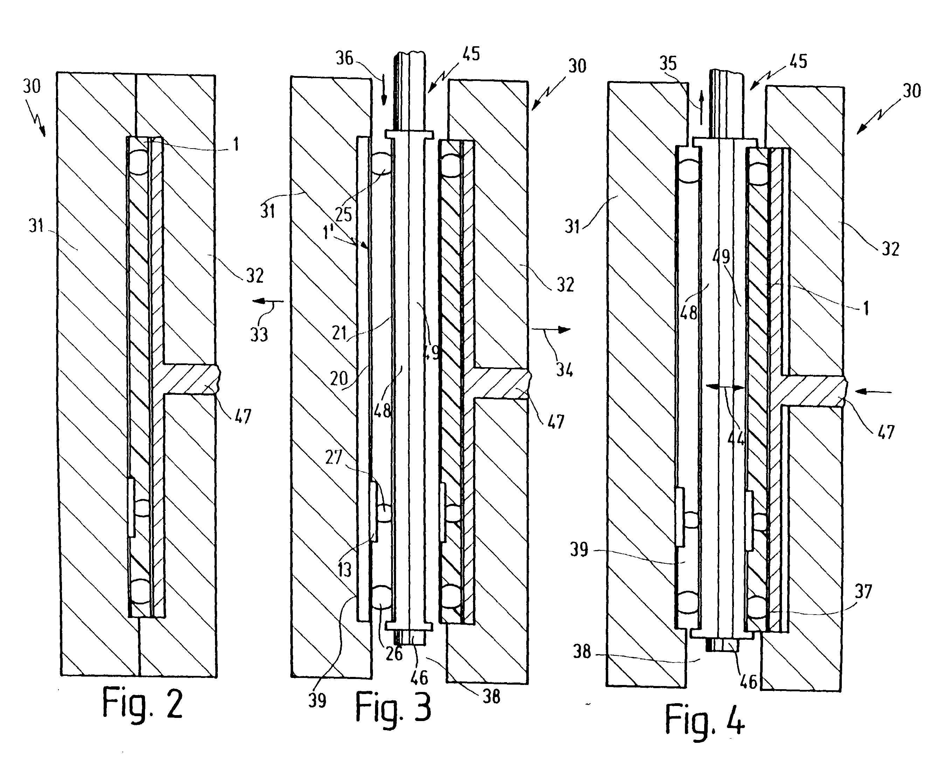

Der Spritzvorgang ist anhand der Figuren 2 bis 4 kurz erläutert. Fig. 2 zeigt in äußerst schematisierter Darstellung ein Kunststoff-Spritzgießwerkzeug 30, das aus einer ersten, linken Werkzeughälfte 31 sowie einer zweiten, rechten Werkzeughälfte 32 besteht. Die zugehörigen Einrichtungen zum Öffnen und Schließen des Werkzeugs 30, sowie die Einrichtungen zum Zuführen der Kunststoffmasse 22 sind der Übersichtlichkeit halber nicht dargestellt. Lediglich eine Zuführ- und Entnahmeeinrichtung für die Kunststoffteile ist schematisch mit der Ziffer 45 angedeutet.

Man erkennt aus Fig. 2, daß sich im Werkzeug 30 ein Verbundkörper 1 befindet, der in einem vorausgegangenen Produktionszyklus hergestellt wurde.

Das Werkzeug 30 öffnet sich nun, indem die Werkzeughälften 31, 32 entlang der Pfeile 33, 34 seitlich nach außen bewegt werden. Gleichzeitig fährt in den sich öffnenden Hohlraum eine Zunge 46 der Zuführ- und Entnahmeeinrichtung 45 ein, die Teil eines Roboters ist. Im gezeigten Beispiel ist lediglich der vordere Teil dargestellt, der mit Greif- und Saugeinrichtungen zur Zuführung eines Rohlings 1' auf der einen Seite und zur Entnahme eines Fertigteils 1 auf der anderen Seite ausgestattet ist. Die Zunge 46 weist zwei relativ zueinander in Richtung des Doppelpfeiles 44 bewegliche Greifelemente auf, die mit den Ziffern 48 und 49 angedeutet sind und zusätzlich mit Saugelementen ausgestattet sind.

Der Rohling 1' besteht im gezeigten Beispiel aus zwei Folien 20, 21, die endseitig durch Klebepunkte 25, 26 miteinander verbunden sind und wobei an einer Folie 20 der Chip 13 anliegt und mit einem weiteren Klebepunkt 27 an der gegenüberliegenden Folie 21 befestigt ist.

Somit ist insgesamt durch die Folien 20, 21 und den Chip 13 durch die Verbindung mittels der Klebepunkte 25-27 ein gut handhabbarer Sandwichverbund gebildet, der an der Zunge 46 durch das Greifelement 48 gehalten ist und so in den Hohlraum 38 zwischen den beiden Werkzeughälften 31, 32 in Richtung des Pfeiles 36 eingebracht wird.

Zu diesem Zeitpunkt befindet sich der fertig gespritzte Verbundkörper noch im Hohlraum der zweiten Werkzeughälfte 32. Sobald nun die Zunge 46 ihre Endstellung zwischen den beiden Werkzeughälften 31, 32 gemäß Fig. 3 erreicht hat, bewegt sich das Greifelement 48 in Richtung auf die linke Werkzeughälfte 31 und übergibt den Rohling 1' beispielsweise mittels Blasluftunterstützung in den Hohlraum 39 der linken Werkzeughälfte.

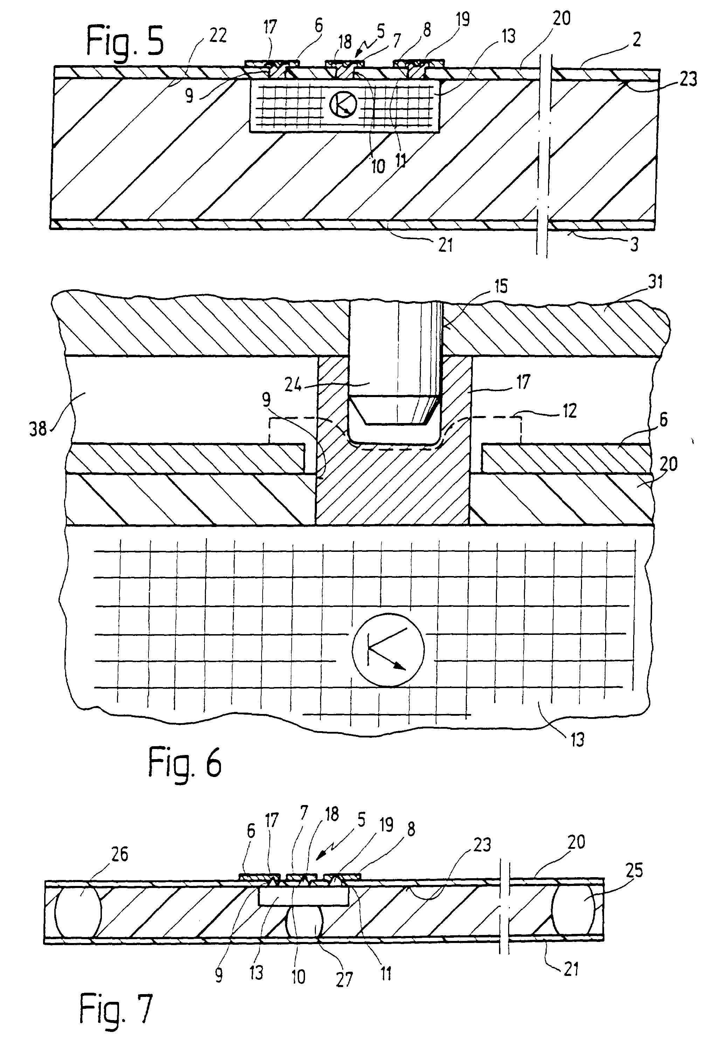

Gleichzeitig wird ein Auswerfer 47 in der rechten Werkzeughälfte 32 betätigt und der fertige Verbundkörper 1 aus dem Hohlraum 37 der rechten Werkzeughälfte 32 ausgestoßen und von dem anderen Greifelement 49 an der Zunge 46 aufgenommen, die sich hierzu in Richtung auf die zweite Werkzeughälfte 32 bewegt, wie in Fig. 4 dargestellt. Die Übernahme des fertig gespritzten Verbundkörpers 1 kann dabei durch Saugluft unterstützt werden.

Die Greifelemente 48, 49 fahren nun wieder zusammen, und die Zunge 46 fährt in Richtung des Pfeiles 35 vollständig aus dem Hohlraum 38 zwischen den beiden Werkzeughälften 31, 32 hinaus, der Auswerfer 47 fährt wieder ein, und beide Werkzeughälften 31, 32 schließen sich, sobald die Zunge 46 vollständig aus dem Hohlraum 38 herausgefahren ist.

In einer Phase, die sich an die Phase gemäß Fig. 4 anschließt, wird der Hohlraum 38 zwischen den beiden Werkzeughälften 31, 32 bei geschlossenen Werkzeughälften mit Kunststoffmasse ausgespritzt, wobei die Kunststoffmasse auf den Chip 13 drückt und diesen gegen die Innenfläche des Kunststoff-Spritzgießwerkzeuges 30 andrückt.

Aus der vorstehenden Beschreibung dürfte deutlich geworden sein, daß das Handling beim Ein- und Ausfahren von Rohlingen bzw. Fertigteilen in den Hohlraum 38 zwischen den beiden Werkzeughälften 31, 32 erheblich erleichtert wird, da durch eine einzige bewegliche Einrichtung, die mit einem Roboter verbunden ist, nämlich durch die Zunge 46, gleichzeitig ein Rohling 1' eingefahren werden kann und ein Fertigteil 1 aus dem Hohlraum 38 entfernt werden kann.

Dies wird dadurch ermöglicht, daß die Rohlinge 1' einen relativ festen Verbund bilden, der in einfacher Weise mittels Saugbzw. Blasluft bzw. mittels entsprechender Greifelemente gehandhabt werden kann.

Der Aufbau des Verbundkörpers 1 wird nunmehr anhand der folgenden Figuren dargestellt. Dabei werden für entsprechende Teile gleiche Bezugsziffern verwendet.

In der Folie 20, an deren Innenfläche 23 der Chip 13 anliegt, sind drei Ausnehmungen 9, 10, 11 ausgestanzt. Durch diese Ausnehmungen 9, 10, 11 erstrecken sich Kontaktpunkte 17, 18, 19, die an der Oberfläche des Chips 13 vorgesehen sind, und die auf die äußere Oberfläche 2 der Folie 20 während des Spritzgießvorgangs aufgenietet sind, so daß der Chip 13 während des Spritzgießvorgangs gleichzeitig an der Folie 20 mechanisch befestigt wird.

Die Kontaktfläche 5 besteht im gezeigten Beispiel aus drei Kontaktsegmenten 6, 7, 8 die unmittelbar über den Kontaktpunkten 17, 18, 19 nachträglich durch Bedrucken mit einer elektrisch leitfähigen Paste hergestellt sind, wie dies gemäß Fig. 5 gezeigt ist oder die auch zuvor bereits auf der Folie 20 hergestellt sein können.

In Fig. 6 ist anhand einer vergrößerten Darstellung erläutert, wie die Kontaktpunkte 17, 18, 19 während des Spritzgießvorgangs durch Schließen der Werkzeughälften 31, 32 plastisch verformt und somit mit der Folie 20 vernietet werden.

Die Kontaktpunkte 17 weisen gemäß Fig. 6 vor Beginn des Spritzgießvorgangs eine etwa hohlzylindrische Form auf und stehen durch eine entsprechende Ausnehmung 9 in der Folie 20 nach außen hervor, die z.B. zuvor durch Ausstanzen erzeugt worden sein kann. In Abwandlung von der Ausführung gemäß Fig. 5, bei der die Kontaktsegmente nach dem Vernieten erzeugt wurden, wurde die Oberfläche der Folie 20 im Bereich der Ausnehmungen zuvor in der gewünschten Weise metallisiert, um die verschiedenen Kontaktsegmente der Kontaktfläche 5 herzustellen.

Gemäß Fig. 6 fährt während des Spritzgießvorgangs ein entsprechend geformter Stempel 24, der gegenüber der Werkzeughälfte 31 beweglich ist, in den Hohlraum des Kontaktpunktes 17 ein und verformt dessen Seitenwände beim weiteren Zusammenfahren plastisch, so daß sich eine Endform ergibt, die durch die gestrichelte Linie 12 in Fig. 6 angedeutet ist, wonach der äußere Rand des Kontaktpunktes 17 auf das Kontaktsegment 6 auf der Folie 20 aufgenietet ist, wodurch gleichzeitig eine dauerhafte und sichere Kontaktierung des Chips 13 mit dem Kontaktsegment 6 hergestellt ist.

Für jeden Kontaktpunkt ist ein entsprechender Stempel an der Werkzeughälfte 31 vorgesehen, so daß sämtliche Kontaktpunkte beim Zusammenfahren der Werkzeughälften 31, 32 vernietet werden. Es versteht sich, daß die Formen der Kontaktpunkte 17, 18, 19 auch bei der Vernietung in gewissen Grenzen variieren können und daß die Stempel 24 auch leicht konisch geformt sein können, um eine Aufweitung und plastische Verformung des Randes des Hohlnietes zu unterstützen.

Grundsätzlich ist es möglich, die Stempel 24 nach Beendigung des Nietvorgangs aktiv, z.B. hydraulisch betätigt, zurückzuziehen. Jedoch ist auch ein "passives" Zurückziehen, bewirkt durch den auf den Chip 13 wirkenden Druck der Kunststoffmasse, vorteilhaft, wobei sich gleichzeitig noch eine gewisse plastische Nachverformung und Aufweitung der Niete ergibt, so daß sich im Ergebnis nur geringe Vertiefungen in der Mitte der Niete ergeben, wie in Fig. 6 etwa durch die gestrichelte Linie 12 angedeutet ist.

Bei der Ausführung gemäß den Figuren 5 und 6 kann eine Befestigung des Chips 13 an der Folie 20 lediglich durch Hindurchstecken der Kontaktpunkte 17, 18, 19 durch die Ausnehmungen 9, 10, 11 der Folie 20 erreicht werden. Dies kann gegebenenfalls noch durch einen leicht bündigen Rand der Kontaktpunkte unterstützt werden, um ein Halten des Chips 13 nach Einstecken der Kontaktpunkte 17, 18, 19 in den Ausnehmungen 9, 10, 11 zu verbessern.

Während des Spritzgießvorgangs drückt die Kunststoffmasse unmittelbar auf die Unterseite des Chips 13 und drückt diesen somit gegen die Folie 20 an und unterstützt die Verformung der Niete, wie zuvor erläutert wurde.

Eine Variante des Verbundkörpers ist in Fig. 7 dargestellt.

Diese Ausführung entspricht im wesentlichen der zuvor anhand der Figuren 2 bis 4 kurz erläuterten Darstellung. Beide Folien 20, 21 sind hierbei endseitig durch Klebepunkte 25, 26 miteinander verbunden. Der Chip 13 liegt an der Innenseite 23 der Folie 20 bündig an und steht mit seinen Kontaktpunkten 17, 18, 19 durch Ausnehmungen 9, 10, 11 in der Folie 20 nach außen hervor.

Die Kontaktpunkte 17, 18, 19 sind im dargestellten Beispiel kegelförmig ausgebildet. Der Chip 13 ist über einen Klebepunkt 27 mit der gegenüberliegenden Folie 21 an der Rückseite des Verbundkörpers 1 festgelegt.

Bei der Herstellung werden zunächst die Ausnehmungen 9, 10, 11 in der Folie 20 erzeugt und der Chip 13 mit seinen Kontaktpunkten 17, 18, 19 durch diese Ausnehmungen hindurchgesteckt. Dieser Vorgang geschieht vorzugsweise bei einer untenliegenden Folie 20, auf die der Chip 13 aufgelegt wird. Anschließend werden die Klebepunkte 25, 26, 27 aufgesetzt und die zweite Folie 21 aufgelegt.

Der so hergestellte Sandwichkörper verfügt schon über eine ausreichende Steifigkeit, um leicht mit der Handlingeinrichtung eines Roboters in den Formhohlraum 38 des Kunststoff-Spritzgießwerkzeuges 30 eingelegt werden zu können, wie dies anhand der Figuren 2 bis 4 erläutert wurde.

Es versteht sich, daß in der Schnittdarstellung gemäß Fig. 7 zwar lediglich drei Klebepunkte zu erkennen sind, daß vorzugsweise jedoch mehrere Klebepunkte, insbesondere in sämtlichen Eckbereichen der Folien, verwendet werden können.

Es versteht sich ferner, daß die in den Zeichnungen dargestellte Anzahl von Kontaktpunkten lediglich beispielhaft zu verstehen ist und daß die Anzahl der Kontaktpunkte und der betreffenden Kontaktsegmente der Kontaktfläche natürlich den jeweiligen Erfordernissen angepaßt werden kann.

Die Kontaktfläche 5 wird bei der Ausführung gemäß den Figuren 5 und 7 nachträglich unmittelbar auf der Folie 20 hergestellt.

Eine bevorzugte, besonders kostengünstige Möglichkeit zur Herstellung der einzelnen Kontaktsegmente der Kontaktfläche 5 besteht im Bedrucken mit einer elektrisch leitfähigen Paste.

Bei einer alternativen galvanischen Herstellung wird in der Regel zunächst eine Vorbehandlung der betreffenden Kontaktsegmente mittels einer chemischen Beizlösung durchgeführt, um eine verbesserte Haftung zu ermöglichen. Anschließend können in einem Bad Metallkeime angelagert werden, die als Wachstumskeime für eine außenstromlose Metallabscheidung wirken. An diesen rein chemischen Vorgang schließt sich dann ein Galvanisierprozeß an, indem z.B. eine Kupferschicht in gewünschter Stärke aufgalvanisiert wird.

Eine weitere Metallisierungsmöglichkeit besteht im Aufdampfen einer dünnen metallischen Haftschicht, die dann galvanisch verstärkt wird.

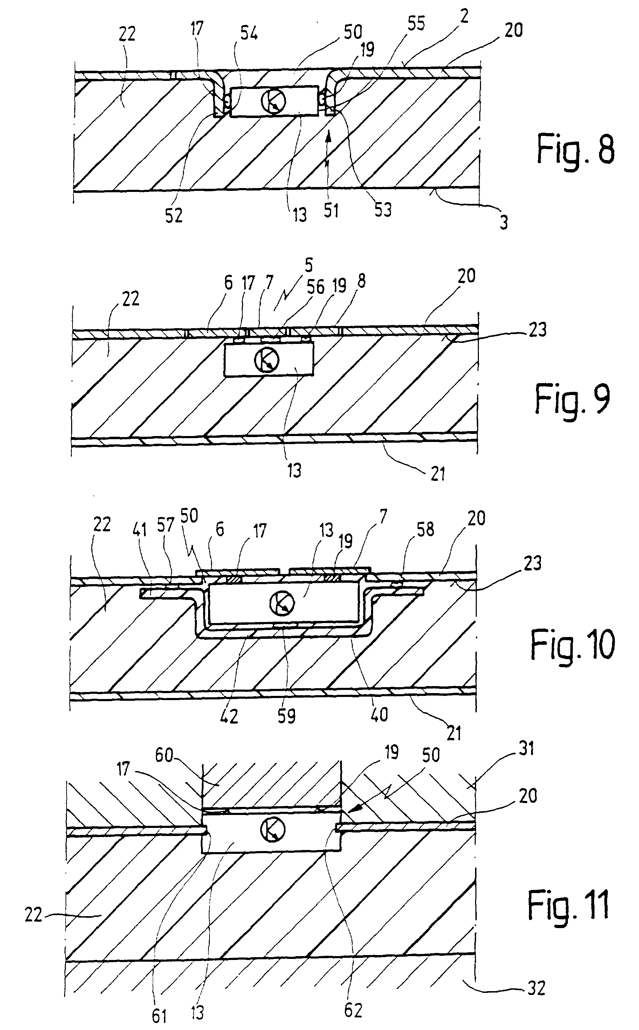

Eine weitere Abwandlung des erfindungsgemäßen Verbundkörpers ist in Fig. 8 dargestellt.

Im Unterschied zu den zuvor beschriebenen Ausführungen besteht die Folie 20, an der der Chip 13 festgelegt wird, im gezeigten Ausführungsbeispiel aus Metall.

In dem Bereich, in dem der Chip 13 eingelagert werden soll, ist eine Ausnehmung 50 in der Folie 20 erzeugt, wobei die Enden der Folie 20 einen nach innen weisenden hülsenförmigen Fortsatz 51 aufweisen, zwischen deren beiden gegenüberliegenden, etwa rechtwinklig von der Folie 20 zum Inneren des Verbundkörpers hin vorstehenden Wandflächen 52, 53 der Chip 13 mit seinen Stirnflächen 54, 55 aufgenommen ist. Die Kontaktpunkte 17, 19 sind hierbei an den Stirnflächen 54, 55 des Chips 13 vorgesehen, so daß der Chip 13 mit seinen Kontaktpunkten federnd zwischen den Wandflächen 52, 53 des Fortsatzes 51 aufgenommen ist.

Da die Folie 20 als Metallfolie ausgebildet ist, weist diese eine erheblich höhere Festigkeit auf, so daß die Federeigenschaften des Fortsatzes 51 ausreichen, um den Chip 13 für den nachfolgenden Spritzgießvorgang ausreichend sicher zu fixieren.

Die Kontaktpunkte 17, 19 sind mit einem leicht schmelzenden Lot versehen, wobei auch die gegenüberliegenden Wandflächen 52, 53 entsprechend vorbehandelt sind.

Während des nachfolgenden Spritzgießvorgangs wird unter der Wirkung der erhöhten Temperatur das Lot aufgeschmolzen und somit eine dauerhafte und sichere Verbindung der Kontaktpunkte 17, 19 mit den Wandflächen 52, 53 des Fortsatzes 51 erreicht.

Der Zwischenraum im Bereich zwischen der Ausnehmung 50 in der Folie 20 und dem Chip 13 wird beim Spritzgießvorgang mit Kunststoffmasse 22 vollständig ausgefüllt.

Die Metallfolie 20 wird vor Befestigung des Chips 13 vorzugsweise bereits derart vorbehandelt, daß einzelne Leiterbahnen bzw. Kontaktsegmente erzeugt sind, wobei eine endgültige Trennung der Kontaktsegmente der Kontaktfläche von dem übrigen Teil der Folie 20 vorzugsweise erst nach dem Spritzgießvorgang erfolgt, da so die entsprechenden Teile nicht herausfallen. Statt dessen wäre gegebenenfalls auch die vorherige Befestigung auf einem Klebeband oder dergleichen möglich.

Nach der Herstellung des Verbundkörpers kann die Trennung der einzelnen Kontaktsegmente beispielsweise durch Schneiden mittels eines Laserstrahls oder durch Ätztechniken erreicht werden, nachdem die übrigen Teile entsprechend abgedeckt sind. Daneben sind natürlich auch Stanz- oder Frästechniken denkbar.

Bei der Ausführung gemäß Fig. 8 weist der Verbundkörper lediglich eine Folie 20 auf, während die Oberfläche 3 an der Unterseite des Verbundkörpers durch die Kunststoffmasse 22 selbst gebildet wird.

Bei einer weiteren Variante gemäß Fig. 9 ist der Chip 13 wiederum an der Innenfläche 23 einer Metallfolie 20 über Kontaktpunkte 17, 19 befestigt.

Im Unterschied zu der zuvor anhand von Fig. 8 beschriebenen Ausführung ist die Metallfolie 20 jedoch hierbei eben ausgebildet, so daß der Chip 13 mit seinen Kontaktpunkten 17, 19 unmittelbar an der Innenfläche 23 der Folie 20 anliegt. Um eine zuvorige Befestigung des Chips 13 an der Folie 20 zu ermöglichen, ist ein Klebepunkt 56 in der Mitte zwischen dem Chip 13 und der Folie 20 aufgebracht.

Obwohl bei der Darstellung gemäß Fig. 9 der Klebepunkt mittig gezeichnet ist, versteht es sich, daß ein oder mehrere Klebepunkte an solchen Stellen zwischen dem Chip 13 und der Folie 20 aufgebracht werden können, daß die elektrische Kontaktierung zwischen den Kontaktpunkten 17, 19 und der Folie 20 nicht behindert wird.

Die betreffenden Kontaktsegmente 6, 7, 8 der Kontaktfläche können wiederum nach der Herstellung des Verbundkörpers etwa durch Schneiden mittels eines Lasers hergestellt werden.

Bei einer weiteren Variante der Erfindung gemäß Fig. 10 ist der Chip 13 von einem topfförmigen Trägerkörper 40 umschlossen, dessen parallel zur Erstreckungsrichtung der Folie 20 verlaufender Rand 41 an der Innenfläche 23 der Folie 20 durch Klebepunkte 57, 58 befestigt ist. Der Chip 13 befindet sich unterhalb einer Ausnehmung 50 in der Folie 20 und ist vollständig vom Trägerkörper 40 umschlossen, wobei ein zwischen dem Trägerkörper 40 und dem Chip 13 bestehender Zwischenraum mit der Kunststoffmasse 22 beim Spritzgießvorgang ausgefüllt wurde.

Der Chip 13 wurde zuvor am Boden 42 mittels eines Klebepunktes 49 befestigt.

Bei der Herstellung wird also zunächst die Ausnehmung 50 in der Folie 20 erzeugt und der Chip 13 am Boden 42 des Trägerkörpers mittels des Klebepunktes 59 befestigt, wobei seine Kontaktpunkte 17, 19 nach außen weisen. Der Trägerkörper 40 wird nunmehr mit seinem Rand 41 an der Innenfläche 23 der Folie 20 mittels der Klebepunkte 57, 58 aufgeklebt.

Beim anschließenden Spritzgießvorgang fließt Kunststoffmasse 22 durch die verbleibende Spalte zwischen dem Rand 41 und der Folie hindurch und füllt somit den verbleibenden Hohlraum vollständig aus, so daß sich ein bündiger Abschluß im Bereich der Ausnehmung 50 ergibt. Dabei stehen die Kontaktpunkte 17, 19, die in Fig. 10 einen rechteckförmigen Querschnitt aufweisen, etwas nach außen hervor.

Beim Spritzgießvorgang plastifizieren sich die Klebepunkte 57, 58, 59.

An den Spritzgießvorgang schließt sich eine Erzeugung der Kontaktsegmente 6, 7 durch Aufdrucken mit einer elektrisch leitfähigen Paste an.

Während des Spritzgießvorgangs dient der topfförmige Trägerkörper 40 zu einem Schutz des Chips 13 gegen thermische und auch gegen mechanische Einflüsse durch die Kunststoffmasse 22.

Eine weitere Variante der Erfindung ist in Fig. 11 schematisch dargestellt.

Hierbei ist die Folie 20 wiederum als Metallfolie ausgebildet, in der eine Öffnung 50 für den Chip 13 erzeugt ist. Der Chip 13 weist an seinen Stirnflächen Nuten 61, 62 auf, mit denen der Chip 13 in die etwas kleinere Ausnehmung 50 eingeklipst ist und somit unter Federspannung gehalten ist. Die Darstellung gemäß Fig. 11 ist übertrieben gezeichnet, um die Befestigung des Chips 13 in der Öffnung 50 der Folie 20 zu verdeutlichen.

Dabei weisen die Kontaktpunkte 17, 19 des Chips 13 nach außen.

Während des Spritzgießvorgangs wird der Chip 13 von einem Stempel 60 der Werkzeughälfte 31 weiter in die noch plastische Kunststoffmasse 22 hineingedrückt, bis der Chip 13 etwa bündig mit der Folie 20 nach außen abschließt.

Diese Art der Befestigung durch Einschnappen an der Folie ermöglicht zusammen mit den nachfolgenden Eindrücken beim Spritzgießvorgang eine besonders einfache Herstellung. Anschließend kann die Kontaktfläche unmittelbar über den Kontaktpunkten etwa durch Bedrucken mit einer elektrisch leitfähigen Paste erzeugt werden.

Es versteht sich, daß statt einer Metallfolie 20 auch eine Kunststoffolie verwendet werden kann, sofern diese über eine ausreichende Steifigkeit verfügt, um den Chip 13 vor dem Spritzgießvorgang ausreichend sicher an der Folie 20 zu befestigen.

Es versteht sich ferner, daß darüber hinaus natürlich auch zusätzlich der Chip beispielsweise noch in einem topfförmigen Trägerkörper aufgenommen sein kann, um während des Spritzgießvorgangs einen thermischen bzw. mechanischen Schutz zu erhalten.

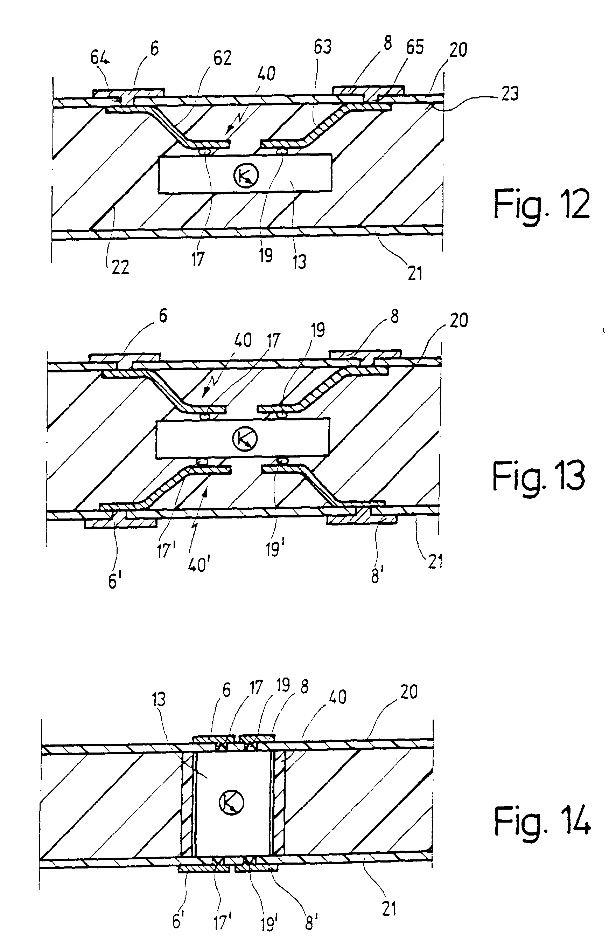

Weitere Ausführungsvarianten der Erfindung werden nunmehr anhand der Figuren 12 bis 18 erläutert.

Gemäß Fig. 12 ist der Chip 13 an einem Trägerkörper 40 mit einem konusförmigen Querschnitt festgelegt, dessen beide äußeren Enden jeweils nach außen hin in der Erstreckungsrichtung der Folie 20 verlängert sind. In der Mitte ist der Trägerkörper 40 unterbrochen, so daß einzelne Kontaktschenkel 62, 63 gebildet sind, die elektrisch gegeneinander isoliert sind. Die äußeren Enden der Kontaktschenkel 62, 63 liegen an der Innenseite 23 der Folie 20 an und sind mit den Kontaktsegmenten 6, 8 auf der Außenseite der Folie 20 über Kontaktzungen 64, 65 verbunden, die sich durch entsprechende Ausnehmungen in der Folie 20 erstrecken. Hierbei kann die Befestigung des Trägerkörpers 40 an der Innenfläche der Folie 23 beispielsweise während eines Galvanisierprozesses erreicht werden, indem die Kontaktsegmente 6, 8 von außen aufgetragen werden und durch die entsprechenden Ausnehmungen in der Folie 20 die Kontaktzungen erzeugen, die die Verbindung zu den Kontaktschenkeln 62, 63 herstellen.

Daneben ist es denkbar, die Kontaktschenkel 62, 63 auf die Innenseite der Folie 20 aufzukleben.

Ferner kann die Innenseite der Folie zuvor mit einer Innenkontaktfläche versehen werden, mit der die Trägerkörper z.B. verlötet werden.

Der Chip 13 wird mit seinen Kontaktpunkten 17, 19 vorzugsweise mit den Kontaktschenkeln 62, 63 des Trägerkörpers 40 verlötet.

Während des nachfolgenden Spritzgießvorgangs wird der Chip 13 vollständig mit Kunststoffmasse 22 umschlossen und zusätzlich durch den Druck der Kunststoffmasse 22 gegen die Kontaktschenkel 62, 63 angepreßt.

Eine weitere Abwandlung der Ausführung gemäß Fig. 12 ist in Fig. 13 dargestellt. Hierbei ist der Chip 13 beiseitig zwischen jeweils einem Trägerkörper 40 und einem Trägerkörper 40' zwischen beiden Folien 20, 21 eingeschlossen.

Dabei ist sowohl an der Folie 20 eine Kontaktfläche mit Kontaktsegmenten 6 und 8 als auch an der Folie 21 eine Kontaktfläche mit den Kontaktsegmenten 6' und 8' gebildet, mit denen der Chip 13 jeweils elektrisch leitend verbunden ist. Hierzu verfügt der Chip 13 über entsprechende Kontaktpunkte 17, 19 an seiner Oberseite und über entsprechende Kontaktpunkte 17', 19' an seiner Unterseite.

Im übrigen entspricht der Aufbau der Trägerkörper 40, 40' und die Befestigung des Chips 13 an den Trägerkörpern und die Verbindung der Trägerkörper mit den Kontaktsegmenten vollständig der zuvor beschriebenen Ausführung.

Bei einer weiteren Variante gemäß Fig. 14 ist der Chip 13 vollständig von einem röhrchenförmigen Trägerkörper 40 umschlossen, der mit seinen beiden Endseiten stirnseitig mit den Folien 20 und 21 verklebt ist. Der Chip 13 ist somit in dem Hohlraum, der an den Seitenflächen durch den Trägerkörper 40 und endseitig durch die Folien 20 und 21 begrenzt ist, eingeschlossen. Seine oberen Kontaktpunkte 17, 19 stehen durch entsprechende Öffnungen in der Folie 20 nach außen hervor; gleichfalls stehen seine Kontaktpunkte 17', 19' an der unteren Folie durch Öffnungen nach außen hervor. Die Kontaktfläche ist nach der Herstellung des Verbundkörpers durch Bedrucken erzeugt.

Bei dieser Ausführungsvariante ist der Chip 13, dessen Form der Größe des gebildeten Hohlraumes angepaßt ist, vollständig gegen äußere Einflüsse während des Spritzgießvorgangs geschützt.

Eine derartige Ausführung bietet sich daher für besonders empfindliche Komponenten an.

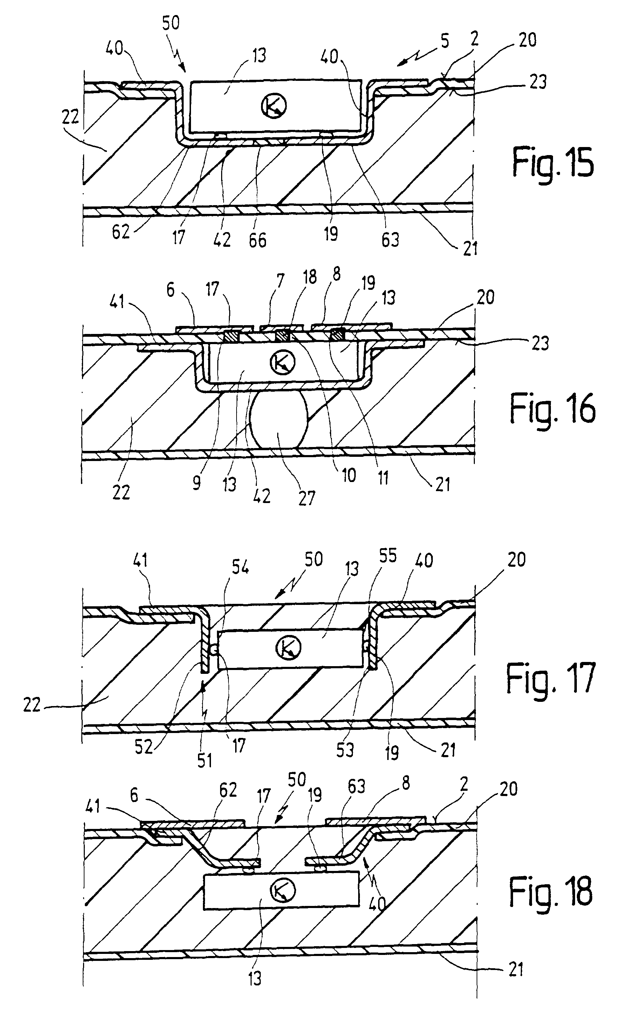

Bei einer weiteren Variante gemäß Fig. 15 ist der Chip 13 ähnlich der Ausführung gemäß Fig. 10 von einem topfförmig ausgebildeten Trägerkörper 40 umschlossen.

Im Unterschied zu der Ausführung gemäß Fig. 10 ist hierbei der topfförmige Trägerkörper 40 jedoch nicht mit seinem Rand 41 an der Innenseite 23 der Folie 20 befestigt, sondern liegt mit seinem Rand 41 von außen auf dem die Öffnung 50 umgebenden Rand der Folie 20 auf. Der Chip 13 und der Rand 41 des Trägerkörpers 40 schließen dabei etwa bündig mit der Oberfläche 2 der Folie 20 ab.

Hierbei ist der Trägerkörper 40 in einzelne Kontaktsegmente oder Kontaktschenkel 62, 63 aufgeteilt, die gemäß Fig. 15 in der Mitte durch eine Isolierung 66 getrennt sind. Es kann sich hierbei um einen entsprechend segmentierten metallischen Trägerkörper 40 handeln. Jedoch besteht der Trägerkörper 40 bevorzugt aus Kunststoff, der segmentweise metallisiert ist.

Der Trägerkörper 40 dient hierbei selbst zur Herstellung einer elektrisch leitfähigen Verbindung zwischen den Kontaktpunkten 17, 19, die am Boden 42 des Trägerkörpers 40 anliegen. Somit können die Ränder 41 des Trägerkörpers 40 selbst als Kontaktfläche genutzt werden oder aber nachträglich nochmals mit einer elektrisch leitfähigen Beschichtung versehen werden.

Obwohl der Trägerkörper zunächst beim Einsetzen in die Öffnung 50 der Folie 20 mit seinem Rand 41 nach außen erhaben hervorsteht, wird er während des Spritzgießvorgangs infolge der erhöhten Temperaturen und des innerhalb des Hohlraums herrschenden Druckes bündig mit der Folie 20 ausgerichtet, bzw. die Folie 20 legt sich an die Oberfläche der Spritzgußform an, so daß der in Fig. 15 dargestellte, etwa bündige Verlauf entsteht. Ein etwa zwischen dem Trägerkörper 40 und dem Chip 13 bestehender Zwischenraum ist derart gering bemessen, daß er makroskopisch nicht in Erscheinung tritt.

Eine weitere Abwandlung der Ausführung gemäß Fig. 15 ist in Fig. 16 dargestellt.

Der wesentliche Unterschied zu der Ausführung gemäß Fig. 15 besteht darin, daß der topfförmig ausgebildete Trägerkörper 40 an der Innenseite 23 der Folie 20 befestigt ist. Hierzu wurden zuvor in der Folie wie bei der Ausführung gemäß Fig. 7 Ausnehmungen 9, 10, 11 erzeugt, durch die die Kontaktpunkte 17, 18, 19 des Chips 13 hindurchgesteckt werden. Der Chip 13 wird mittels des Trägerkörpers 40 an der Innenseite 23 der Folie 20 befestigt, indem der Rand 41 mit der Folie 20 verklebt wird.

Der Chip 13 ist somit während des Spritzgießvorgangs vollständig gegenüber der heißen Kunststoffmasse 22 gekapselt und mechanisch geschützt. Anstelle einer Verklebung des Randes 41 mit der Folie 20 kann auch der Boden 42 des Trägerkörpers 40 mittels eines Klebepunktes 27 an der gegenüberliegenden Folie 21 befestigt sein, wie dies in Fig. 16 dargestellt ist.

Soweit jedoch beispielsweise auf eine zweite Folie 21 verzichtet wird, wird der Trägerkörper 40 vorzugsweise mit seinem Rand 41 mit der Folie 20 verklebt.

Die Kontaktsegmente 6, 7, 8 der Kontaktfläche werden wiederum nach der Herstellung des Verbundkörpers vorzugsweise durch Bedrucken mit einer elektrisch leitfähigen Paste erzeugt.

Eine weitere Variante ist in Fig. 17 dargestellt. Hierbei ist wiederum eine Ausnehmung 50 in der Folie 20 erzeugt, durch die ein flanschförmiger Trägerkörper 40 mit seinem nach innen weisenden Fortsatz 51 hindurchgesteckt ist, wobei der Chip 13 mit seinen Kontaktpunkten 17, 19 stirnseitig zwischen den Wandflächen 52, 53 des Fortsatzes 51 gehalten ist, ähnlich der Ausführung gemäß Fig. 8.

Der Trägerkörper 40 liegt mit seinem äußeren Rand 41 auf dem die Öffnung 50 in der Folie 20 umgebenden Rand der Folie 20 flächig auf. Der Zwischenraum zwischen der Ausnehmung 50, dem Chip 13 und dem Trägerkörper 40 ist wiederum vollständig mit Kunststoffmasse 22 ausgefüllt, so daß sich ein bündiger Abschluß an der Oberfläche der Folie 20 ergibt. Hierbei kann der Trägerkörper 40 wiederum aus einem Kunststoff bestehen, der segmentweise metallisiert ist. Der Chip 13 ist dabei vorzugsweise unter Federspannung zwischen den Wandflächen 52, 53 des Fortsatzes 51 aufgenommen.

Der Trägerkörper 40 kann in der Öffnung 50 in der Folie 20 eingeklipst und somit beispielsweise unter Federspannung gehalten werden. Hierzu kann die Öffnung 50 in der Folie 20 etwas kleinere Abmessungen als der Fortsatz 51 aufweisen.

Eine letzte Variante der Erfindung ist in Fig. 18 dargestellt. Hierbei ist der Trägerkörper 40 ähnlich der Ausführung gemäß Fig. 12 konusförmig ausgebildet und liegt in Abweichung von der Ausführung gemäß Fig. 12 jedoch mit seinem Rand 41 auf der äußeren Oberfläche 2 der Folie 20 auf einem Rand bündig auf, der die Öffnung 50 umgibt.

Der Trägerkörper 40 ist hierbei wiederum in einzelne Kontaktschenkel 62, 63 unterteilt, die elektrisch leitfähig ausgebildet sind und an deren Innenseite der Chip 13 mit seinen Kontaktpunkten 17, 19 elektrisch leitend verbunden ist, z.B. verlötet ist. Der Trägerkörper 40 kann mit seinem Rand 41 an der Öffnung 50 der Folie 20 durch Einklipsen befestigt sein, was in Fig. 18 jedoch nicht dargestellt ist. Alternativ kann eine Befestigung durch Kleben erfolgen.

Nach der Beendigung des Spritzgießvorgangs ist zusätzlich auf der Oberfläche 2 der Folie 20 eine Kontaktfläche durch Aufdrucken erzeugt, die durch die Kontaktschenkel 62, 63 des Trägerkörpers 40 mit den Kontaktpunkten 17, 19 des Chips 13 verbunden ist.

## Patentansprüche

1. Verfahren zum Herstellen eines Verbundkörpers (1) mit einer Kunststoffmasse (22) und mindestens einem zumindest teilweise in der Kunststoffmasse (22) eingelagerten Chip (13), bei dem ein Hohlraum (38) eines Kunststoff-Spritzgießwerkzeuges (30) mit der Kunststoffmasse (22) ausgespritzt wird, bei dem ferner der Chip (13) in die Kunststoffmasse (22) eingelagert und eine elektrische Kontaktierung zwischen dem Chip (13) und Kontaktsegmenten (6, 7, 8) einer an einer Oberfläche (2) des Verbundkörpers (1) befindlichen Kontaktfläche (5) hergestellt wird, **dadurch gekennzeichnet, daß** die Kontaktierung während des Spritzgießvorganges fixiert wird.

2. Verfahren nach Anspruch 1, **dadurch gekennzeichnet, daß** der Chip (13) und die Kontaktsegmente (6, 7, 8) zunächst lose zusammengelegt und dann während des Spritzgießvorganges durch das Fixieren endgültig festgelegt werden.

3. Verfahren nach Anspruch 1 oder 2, **dadurch gekennzeichnet, daß** die Kontaktierung während des Spritzgießvorganges durch Anlage unter Druck fixiert wird.

4. Verfahren nach Anspruch 1 oder 2, **dadurch gekennzeichnet, daß** die Kontaktierung während des Spritzgießvorganges durch Verlöten fixiert wird.

5. Verfahren nach Anspruch 4, **dadurch gekennzeichnet, daß** das Verlöten unter der Wärmeeinwirkung des Spritzgießvorganges erfolgt.

6. Verfahren nach Anspruch 1 oder 2, **dadurch gekennzeichnet, daß** die Kontaktierung während des Spritzgießvorganges durch Vernieten fixiert wird.

7. Verfahren nach einem oder mehreren der Ansprüche 1 bis 6, **dadurch gekennzeichnet, daß** die Kontaktierung während des Fixierens hergestellt wird.

8. Verfahren nach einem oder mehreren der Ansprüche 1 bis 7, **dadurch gekennzeichnet, daß** der Chip (13) an einer Folie (20, 21) befestigt wird, die eine flache Seite des Verbundkörpers (1) bildet, und daß der Chip (13) gemeinsam mit der Folie (20, 21) in den Hohlraum (38) des Kunststoff-Spritzgießwerkzeuges (30) eingebracht wird.

9. Verfahren nach einem oder mehreren der vorhergehenden Ansprüche, **dadurch gekennzeichnet, daß** der Chip (13) mit der Kontaktfläche (5) über Kontaktpunkte (17, 18, 19, 17', 18', 19') an seiner Oberfläche (2) elektrisch leitend verbunden wird.

10. Verfahren nach Anspruch 8 und 9, **dadurch gekennzeichnet, daß** in der Folie (20) Ausnehmungen (9, 10, 11) erzeugt werden, in die die Kontaktpunkte (17, 18, 19) eingesteckt werden, um eine elektrisch leitende Verbindung zur Außenfläche der Folie (20) herzustellen.

11. Verfahren nach Anspruch 4 und 10, **dadurch gekennzeichnet, daß** die Kontaktpunkte (17, 18, 19) des Chips (13) mit der Folie (20) verlötet werden.

12. Verfahren nach einem oder mehreren der Ansprüche 1 bis 11, **dadurch gekennzeichnet, daß** eine elektrische Verbindung zwischen dem Chip (13) und der Kontaktfläche (5) nach dem Spritzgießvorgang komplettiert wird.

13. Verfahren nach einem oder mehreren der Ansprüche 8 bis 12, **dadurch gekennzeichnet, daß** als Folie (20) eine Metallfolie verwendet wird.

14. Verfahren nach einem oder mehreren der Ansprüche 8 bis 13, **dadurch gekennzeichnet, daß** die Kontaktfläche (5) zumindest teilweise vor dem Befestigen des Chips (13) an der Folie (20) erzeugt wird.

15. Verfahren nach einem oder mehreren der vorhergehenden Ansprüche, **dadurch gekennzeichnet, daß** der Chip (13) mit Kontaktflächen (5) an den beiden flachen Seiten oder an einer Stirnseite des Verbundkörpers (1) verbunden wird.

16. Kunststoff-Spritzgießwerkzeug zur Herstellung von Verbundkörpern mit einer Kunststoffmasse (22), in die zumindest teilweise ein Chip (13) eingelagert ist, mit zwei beweglichen Werkzeughälften (31, 32), zwischen denen ein Hohlraum (38) gebildet ist, in den flüssige Kunststoffmasse (22) einspritzbar ist, und mit einer Zuführ- und Entnahmeeinrichtung (45) zum Einlegen von Rohteilen (1') in den Hohlraum (38) und Entnehmen der Verbundteile (1) nach Beendigung des Spritzgießvorgangs, **dadurch gekennzeichnet, daß** in einer Werkzeughälfte (31) eine in eine Oberfläche des Hohlraums (38) mündende Bohrung vorgesehen ist, in der ein Stempel (24) beweglich geführt ist, der zur Vernietung eines von dem Chip (13) hervorstehenden Nietes (17) mit einer in den Hohlraum (38) eingelegten Folie (20) ausgebildet ist.

## Claims

1. A method for producing a composite component (1) having a plastic material (22) and at least one chip (13) being at least partially immersed in the plastic material (22), a hollow cavity (38) of a plastic material injecton mold (30) being filled with the plastic material (22), the chip (13) being, further, embedded in the plastic material (22) and an electric contact being made between the chip (13) and contact segments (6, 7, 8) of a contact area (5) at a surface (2) of the composite component (1), **characterized in that** the contact is fastened during the injection-molding process.

2. The process of claim 1, **characterized in that** the chip (13) and the contact segments (6, 7, 8) are first assembled loosely and are then finally secured by the fastening during the injection-molding process.

3. The process of claim 1 or 2, **characterized in that** the contact is fastened during the injection-molding by application under pressure.

4. The process of claim 1 or 2, **characterized in that** the contact is fastened during the injection-molding by soldering.

5. The process of claim 4, **characterized in that** the soldering is made under the thermal action of the injection-molding process.

6. The process of claim 1 or 2, **characterized in that** the contact is fastened during the injection-molding by riveting.

7. The process of one ore more of claims 1 to 6, **characterized in that** the contact is made during the fastening.

8. The process of one or more of claims 1 to 7, **characterized in that** the chip (13) is affixed to a foil (20, 21) configurating a planar side of the composite component (1), and that the chip (13) together with the foil (20, 21) is inserted into the hollow cavity (38) of the injection mold.

9. The process of one or more of the preceding claims, **characterized in that** the chip (13) is electrically connected with the contact area (5) via contact points (17, 18, 19, 17', 18', 19') at its surface (2).

10. The process of claim 8 or 9, **characterized in that** cutouts (9, 10, 11) are generated in the foil (20), the contact points (17, 18, 19) being plugged into the cutouts (9, 10, 11) for establishing an electrically conductive connection with the outer surface of the foil (20).

11. The process of claim 4 and 10, **characterized in that** the contact points (17, 18, 19) of the chip (13) are soldered to the foil (20).

12. The process of one or more of claims 1 to 11, **characterized in that** an electrical connection between the chip (13) and the contact area (5) is completed after the injection-molding.

13. The process of one or more of claims 8 to 12, **characterized in that** a metal foil is used as the foil (20).

14. The process of one or more of claims 8 to 13, **characterized in that** the contact area (5) is generated on the foil (20) at least partially prior to affixing the chip (13).

15. The process of one or more of the preceding claims, **characterized in that** the the chip (13) is connected with contact areas (5) on both planar sides or on a front side of the composite component (1).

16. A plastic material injection mold for producing composite components having a plastic material (22) and a chip (13) embedded therein at least partially, two movable mold portions (31, 32) and a hollow cavity configurated therebetween into which plastic material may be injected, and a feed- and discharge assembly (45) for placing raw components (1') into the hollow cavity (38) and for discharging the composite components (1) after finalizing the injection-molding process, **characterized in that** a bore is provided in one of the mold portions, the bore terminating into a surface of the cavity (38), a die (24) being arranged movable within the bore, the die being provided for riveting a rivet protruding from the chip (13) with a foil (20) placed into the cavity (38).

## Revendications

1. Procédé de fabrication d'un corps composite (1) avec une masse plastique (22) et au moins une puce (13) enrobée au moins partiellement dans la masse plastique (22), selon lequel la masse plastique (22) est injectée dans une cavité (38) d'un moule d'injection de matière plastique (30), selon lequel en outre la puce (13) est enrobée dans la masse plastique (22) et une connexion électrique est établie entre la puce (13) et les segments de contact (6, 7, 8) d'une surface de contact (5) située sur une surface (2) du corps composite (1), **caractérisé en ce que** la connexion est fixée pendant l'opération d'injection.

2. Procédé selon la revendication 1, **caractérisé en ce que** la puce (13) et les segments de contact (6, 7, 8) sont tout d'abord assemblés librement puis immobilisés définitivement par l'opération de fixation au cours de l'opération d'injection.

3. Procédé selon la revendication 1 ou 2, **caractérisé en ce que** la connexion est fixée par application sous pression au cours de l'opération d'injection.

4. Procédé selon la revendication 1 ou 2, **caractérisé en ce que** la connexion est fixée par brasage au cours de l'opération d'injection.

5. Procédé selon la revendication 4, **caractérisé en ce que** le brasage s'effectue sous l'effet de la chaleur dégagée au cours de l'opération d'injection.

6. Procédé selon la revendication 1 ou 2, **caractérisé en ce que** la connexion est fixée par rivetage au cours de l'opération d'injection.

7. Procédé selon une ou plusieurs des revendications 1 à 6, **caractérisé en ce que** la connexion est établie au cours de l'opération de fixation.

8. Procédé selon une ou plusieurs des revendications 1 à 7, **caractérisé en ce que** la puce (13) est fixée à une feuille (20, 21) qui forme une face plane du corps composite (1) et **en ce que** la puce (13) est introduite conjointement avec la feuille (20, 21) dans la cavité (38) du moule d'injection plastique (30).

9. Procédé selon une ou plusieurs des revendications précédentes, **caractérisé en ce que** la puce (13) est reliée électriquement à la surface de contact (5) par des points de contact (17, 18, 19, 17', 18', 19') situés sur sa surface (2).

10. Procédé selon les revendications 8 et 9, **caractérisé en ce que** sont pratiqués dans la feuille (20) des évidements (9, 10, 11), dans lesquels peuvent être insérés les points de contact (17, 18, 19) pour établir la liaison électrique avec la surface externe de la feuille (20).

11. Procédé selon les revendications 4 et 10, **caractérisé en ce que** les points de contact (17, 18, 19) de la puce (13) sont brasés avec la feuille (20).

12. Procédé selon une ou plusieurs des revendications 1 à 11, **caractérisé en ce qu'**une liaison électrique entre la puce (13) et la surface de contact (5) est complétée après l'opération d'injection.

13. Procédé selon une ou plusieurs des revendications 8 à 12, **caractérisé en ce que** la feuille (20) consiste en une feuille métallique.

14. Procédé selon une ou plusieurs des revendications 8 à 13, **caractérisé en ce que** la surface de contact (5) est produite au moins partiellement avant fixation de la puce (13) sur la feuille (20).

15. Procédé selon une ou plusieurs des revendications précédentes, **caractérisé en ce que** la puce (13) est reliée aux surfaces de contact (5) au niveau des deux faces planes ou d'une extrémité frontale du corps composite (1).

16. Moule d'injection plastique pour la fabrication de corps composites avec une masse plastique (22) dans laquelle une puce (13) est enrobée au moins partiellement, comportant deux moitiés de moule mobiles (31, 32) entre lesquelles est formée une cavité (38), dans laquelle la masse plastique fluide (22) peut être injectée, et comportant un dispositif d'admission et d'évacuation (45) pour insérer des pièces brutes (1') dans la cavité (38) et évacuer les pièces composites (1) après achèvement de l'opération d'injection, **caractérisé en ce qu'**il est prévu, dans une moitié de moule (31), un perçage qui débouche dans une surface de la cavité (38) et dans lequel est guidé mobile un poinçon (24) qui est formé pour rabattre un rivet (17) dépassant de la puce (13) sur une feuille (20) insérée dans la cavité (38).
